(19) **Europäisches Patentamt / European Patent Office / Office européen des brevets**

(11) **EP 4 553 495 A1**

(12) # DEMANDE DE BREVET EUROPEEN

(43) Date de publication:
**14.05.2025 Bulletin 2025/20**

(21) Numéro de dépôt: **24211779.4**

(22) Date de dépôt: **08.11.2024**

(51) Classification Internationale des Brevets (IPC):
***G01N 31/22*** *(2006.01)*

(52) Classification Coopérative des Brevets (CPC):
**G01N 31/22;** G01N 31/223; G01N 31/224

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **09.11.2023 FR 2312241**

(71) Demandeurs:
• **Commissariat à l'Energie Atomique et aux Energies Alternatives**
**75015 Paris (FR)**
• **Centre National de la Recherche Scientifique**
**75016 Paris (FR)**

• **Electricité de France**
**75008 Paris (FR)**

(72) Inventeurs:
• **LORTHIOY, Mélanie**
**78401 CHATOU (FR)**
• **BRETAUD, Maxime**
**78401 CHATOU (FR)**
• **TRAN THI, Thu-Hoa**
**92120 MONTROUGE (FR)**
• **NGUYEN, Trung Hieu**
**75005 PARIS (FR)**
• **LE CHEVALLIER, Guillaume**
**91191 GIF SUR YVETTE CEDEX (FR)**

(74) Mandataire: **Plasseraud IP**
**104 Rue de Richelieu**
**CS92104**
**75080 Paris Cedex 02 (FR)**

(54) **PROCÉDÉ DE DÉTECTION DE COMPOSÉS DE TYPE AMINE DANS LES COMPARTIMENTS EAU ET AIR**

(57)    La présente invention porte sur un procédé de détection d'au moins un composé de type amine, ledit composé étant choisi parmi l'hydrazine, l'éthanolamine et la morpholine, à l'aide d'une composition de réactifs comprenant un mélange de 4-(diméthylamino)-cinnamaldéhyde et d'acide polystyrène sulfonique, sur ladite composition et son utilisation.

[Fig. 1]

[Fig. 2]

**Description**

**Domaine technique**

La présente invention concerne un nouveau procédé de détection et optionnellement de quantification de composés de type amine, en particulier de l'hydrazine ($N_2H_4$), adapté à la fois aux compartiments eau (hydrazine en solution aqueuse) et air (hydrazine dans l'atmosphère).

L'hydrazine est une substance classée CMR (CIRC 2B-UE 1B). Elle a intégré en 2011 la liste des substances candidates extrêmement préoccupantes (en anglais « candidate list of substances of very high concern ») du règlement REACH. En 2017, l'Union Européenne a abaissé d'un facteur 10 sa VLEP (Valeur Limite d'Exposition Professionnelle sur 8 H) imposant un nouveau seuil de 10 ppb (0,013 mg/m$^3$), applicable au plus tard le 17 Janvier 2020. Outre le volet sanitaire, l'hydrazine est classée très toxique pour les organismes aquatiques (classement UE H400 et H410).

Du fait de son caractère CMR, l'hydrazine n'est plus un comburant pour les fusées, mais reste utilisée dans de nombreux domaines, notamment comme intermédiaire de synthèse organique dans les industries pharmaceutiques et chimiques, ou agent gonflant pour les mousses de polymères, ou comme réducteur de sels de métaux ou encore en tant qu'inhibiteur de corrosion dans l'eau de circuits de chaudières industrielles, par exemple.

Du fait de sa toxicité, l'évaluation des risques associés aux rejets d'hydrazine environnementaux est importante et nécessite de pouvoir détecter et optionnellement quantifier la présence d'hydrazine dans l'environnement.

L'évaluation de ces risques est à ce jour fortement limitée par la métrologie associée à cette substance, en particulier concernant la mesure directe in-situ. En effet, malgré le fait qu'il existe des méthodes analytiques relativement sensibles et spécifiques (lecture finale par HPLC-UV), celles-ci ne peuvent pas être mises en oeuvre facilement ni être compatibles avec des pratiques industrielles. Les méthodes analytiques « à réponse instantanée » ne sont ni assez sélectives ni assez précises et sensibles pour permettre d'évaluer les concentrations d'hydrazine gazeux attendues dans les rejets ultimes.

Le procédé objet de la présente invention vient apporter une solution à ces problématiques.

En effet, le procédé selon l'invention permet de détecter et optionnellement de quantifier sélectivement l'hydrazine en présence potentielle d'interférents servant à alcaliniser l'eau ou issus de la dégradation de l'hydrazine, tels que l'éthanolamine ($NH_2EtOH$), la morpholine, ou l'ammoniac ($NH_3$). Les concentrations de $NH_2EtOH$, morpholine et $NH_3$ peuvent être jusqu'à 100 à 200 fois plus élevées que celle de l'hydrazine sans que cela ne diminue l'efficacité et la précision du procédé de détection selon l'invention.

Le réactif utilisé réagit également et simultanément avec ces autres amines en formant des composés colorés distincts du composé formé avec l'hydrazine. La méthode permet donc également de détecter et de déterminer la concentration de l'éthanolamine ou de la morpholine en même temps que celle de l'hydrazine, ce qui peut permettre par exemple de vérifier la bonne alcalinisation de l'eau.

Par ailleurs, la détection et quantification de l'hydrazine peuvent demander d'être réalisées à la fois dans les compartiments eau et air, et le procédé selon l'invention le permet.

Dans le compartiment eau, il s'agit de prélever des échantillons à analyser sans perte de matière du fait de la volatilité du composé cible ($N_2H_4$) et de celle des interférents ($NH_3$, $NH_2EtOH$, morpholine) pour une analyse in situ ou en différée au laboratoire après 24H. La méthode d'analyse doit être sélective vis-à-vis de $N_2H_4$ dont la concentration est jusqu'à 100 à 200 fois plus faible que celles des interférents. La gamme de concentration de $N_2H_4$ dans le compartiment eau peut être large, allant de 0,2 à 200 $\mu g \cdot L^{-1}$ (soit de 0,2 à 200 ppb).

Dans le compartiment air, il s'agit de prélever l'air ambiant qui, en plus du dioxygène ($O_2$), de la vapeur d'eau et des COVs (Composés Organiques Volatils) contient aussi d'autres composés azotés ($N_2H_4$, $NH_3$, $NH_2EtOH$, morpholine). Un des objectifs est donc de mesurer sélectivement l'hydrazine gazeuse dans une gamme de concentration large, allant de 1,3 à 264 $\mu g \cdot m^{-3}$ (soit de 1 à 200 ppb) et également de quantifier les potentiels interférents azotés. L'analyse doit être réalisable in situ ou en différée au laboratoire après 24H.

La détection de l'hydrazine a fait l'objet de nombreux travaux et les méthodes de détection sont aussi nombreuses que variées en raison de la forte réactivité chimique de ce composé. Cependant la plupart des travaux sont concentrés soit sur la mesure de l'hydrazine dans l'eau, soit sur de la mesure dans l'air. Les méthodes permettant d'atteindre à la fois les compartiments eau et air sont rares, voire inexplorées.

De ce fait, dans la description de l'état de l'art qui suit, les compartiments eau et air sont traités séparément et seules les méthodes proposées dans la littérature aptes à couvrir les gammes de concentration recherchées dans les compartiments eau et air sont décrites, soit respectivement de 0,2 à 200 $\mu g \cdot L^{-1}$ (soit de 0,2 à 200 ppb) et 1,3 à 264 $\mu g \cdot m^{-3}$ (soit de 1 à 200 ppb)

**Technique antérieure**

## Détection de l'hydrazine dans l'eau

L'hydrazine étant à la fois un agent réducteur puissant, un bon nucléophile et une base, la détection peut être alors obtenue par sa propriété nucléophile, réductrice ou basique.

La détection basée sur la propriété nucléophile est la méthode la plus étudiée et repose principalement sur des réactions de substitution nucléophile sur un groupement carbonyle d'un aldéhyde aromatique formant un produit coloré absorbant ou/et fluorescent. Le para-diméthylaminobenzaldéhyde (pDMAB) est la méthode la plus couramment utilisée industriellement. Le para-diméthylaminobenzaldéhyde réagit avec l'hydrazine en milieu acide et conduit à un composé d'addition, le p-diméthylamino-benzalazine, absorbant dans le domaine visible avec un maximum centré à 458 nm ou 454 nm, selon le milieu environnant. La valeur du coefficient d'extinction molaire du p-diméthylamino-benzalazine est élevée, autour 60000 L·cm$^{-1}$ [1, 2, 3] et la limite de détection de l'hydrazine avec ce réactif est de 4,7 $\mu$g·L$^{-1}$ lorsque le dosage est réalisé avec une cuve spectrophotométrique de 5 cm de parcours optique. Le p-diméthylamino-benzalazine étant instable, sa détection est limitée dans le temps et il n'est pas possible de réaliser des mesures en différé au-delà de 16H. A partir de cette méthode, des modifications de la réaction ont été réalisées par plusieurs équipes afin d'améliorer la procédure de détection de l'hydrazine et/ou la sensibilité.

George et al. [4] ont amélioré la sensibilité en produisant *in situ* de la 2,4-dinitrophénylhydrazine en faisant réagir d'abord l'hydrazine avec le 2,4-dinitrochlorobenzène, en présence d'acétate de sodium et de diéthylène glycol. La 2,4-dinitrophénylhydrazine étant un excellent réactif pour la détection et le dosage des groupements carbonyles, elle réagit ensuite avec pDMAB en milieu acide pour conduire à la formation d'hydrazone de coloration jaune. L'hydrazone absorbant à 458 nm présente un coefficient d'extinction molaire très élevé ($\varepsilon_{458nm} \approx 81000$ L·mol$^{-1}$·cm$^{-1}$), ce qui permet d'augmenter la sensibilité de la mesure. Cependant, cette méthode utilise un composé reprotoxique et cancérigène, le 2,4-dinitrochlorobenzène. Par ailleurs, la méthode est longue et complexe car la procédure de détection comporte 5 étapes successives difficiles à mettre en oeuvre in situ :

1) Formation du 2,4-dinitrophénylhydrazine en chauffant le mélange jusqu'à ce que le volume soit réduit à la moitié du volume initial

2) Réaction du 2,4-dinitrophénylhydrazine avec pDMAB

3) Refroidissement du mélange à température ambiante

4) Formation du produit final en ajoutant HCl

5) Dosage du produit final par UV-visible à 458 nm.

Dans l'étude d'Ortega-Barrales et al. [5], la sensibilité est améliorée avec le dosage du produit coloré (benzalazine) en phase solide ; une résine échangeuse d'ions Dowex 5OWx8 est ajoutée dans le milieu réactionnel pour piéger et concentrer la benzalazine. Cette dernière se fixe sur les billes de Dowex par centrifugation. La résine est ensuite récupérée par filtration et la benzalazine adsorbée sur la résine transparente est dosée en phase solide par spectrophotométrie à 464 nm. La limite de détection est de l'ordre de 0,016 $\mu$g·L$^{-1}$ pour 1 litre d'échantillon. Cette méthode bien que très sensible est cependant difficilement adaptable sur le terrain au vu de sa technicité.

D'autres benzaldéhydes substitués ont également été étudiés pour le dosage de l'hydrazine tels que la vanilline [6], le vératraldéhyde [7], le 2-hydroxy-1-naphthaldéhyde [8] et le 5-Nitro-2-furaldéhyde [9]. Ces quatre molécules-sonde sont moins réactives que le pDMAB et les réactions ont été produites à haute température.

Depuis ces dernières années, plusieurs équipes ont mis au point des méthodes de détection sélective de l'hydrazine basées sur des sondes fluorescentes pour déterminer principalement la présence d'hydrazine dans l'eau potable, dans l'eau brute (rivières, ...) et en particulier dans les cellules vivantes. Les sondes fluorescentes sont en général des molécules polycycliques aromatiques pourvues d'un ou de deux sites électrophiles pouvant réagir avec l'hydrazine.

Roy et al. [10], Nguyen et al. [11] ont publié des revues sur les différentes sondes fluorescentes utilisées pour la détection de l'hydrazine. Avec l'utilisation de sondes fluorescentes, il est possible d'atteindre des limites basses de concentration d'hydrazine dans l'eau dans la gamme des ng·L$^{-1}$. Les meilleures sensibilités atteintes sont de 35 ng·L$^{-1}$ [12], 60 ng·L$^{-1}$ [13], 280 ng·L$^{-1}$ [14] et 300 ng·L$^{-1}$ [15] dans l'eau. Cependant, l'inconvénient principal des sondes fluorescentes est leur disponibilité. En effet, aucune des sondes proposées n'est pour l'instant commercialisée. Par ailleurs, les auteurs ne mentionnent pas d'étude de stabilité des produits d'addition formés.

D'autres méthodes sont basées sur la **propriété réductrice** de l'hydrazine en milieu acide. Afkhami et al. [16] ont proposé une méthode de détection indirecte de l'hydrazine en solution basée sur l'inhibition de la réaction d'oxydo-réduction entre l'ion bromate et l'acide chlorhydrique. En milieu acide, l'ion bromate (BrO$_3^-$) est réduit par l'ion chlorure (Cl$^-$) en Br$_2$. Le chlore et le brome sont alors dosés par la décoloration du méthylorange, qui absorbe à 525 nm. La présence de l'hydrazine aura pour effet d'inhiber la décoloration du méthylorange. En effet, l'hydrazine étant un réducteur fort, il réagit rapidement avec le chlore et le brome pour former les ions Cl- et Br-. La vitesse de décoloration est réduite en présence d'hydrazine. Cette méthode permet de doser linéairement de 9,6 à 1024 $\mu$g·L$^{-1}$ d'hydrazine, avec une limite de détection de 2,72 $\mu$g·L$^{-1}$.

Le méthylorange peut être remplacé par le Victoria bleu 4R [17] pour l'obtention d'une sensibilité similaire. Cependant, des interférences existent ; $NH_3$, interférent de l'hydrazine, est réactif vis-à-vis de $Cl_2$ et de $Br_2$, ce qui rend la méthode non sélective.

L'hydrazine peut aussi réduire les molécules d'acide chloraurique ($HAuCl_4$), en induisant la formation de nanoparticules d'or, AuNPs, stables en présence d'acide sulfamique et dont le plasmon de résonance est détecté dans le visible. Gao et al. [18] ont mis à profit cette méthode en suivant la croissance des AuNPs dont la taille augmente avec la concentration d'hydrazine. La solution, initialement incolore, devient rouge puis bleu lorsque la concentration de l'hydrazine est importante. Le suivi de l'absorbance à 540 nm permet de détecter l'hydrazine dans une large gamme de concentration de 3,2 à 8096 $\mu$g·L$^{-1}$, avec une limite de détection de 2,72 $\mu$g·L$^{-1}$. Des modifications de cette méthode ont été réalisées par différentes équipes en remplaçant l'acide sulfamique par différents stabilisants comme le dodécylsulfate de sodium [19], l'acide dipicolinique [20] ou le citrate de sodium [21] afin d'améliorer la sensibilité. Ce dernier présente une sensibilité intéressante, avec la limite de détection de $3,2.10^{-5}$ $\mu$g·L$^{-1}$ mais avec un domaine de mesure très limité ne s'étendant qu'entre $3,2.10^{-4}$ et 3,2 $\mu$g·L$^{-1}$.

Le même principe a été repris par Tashkhourian et al. [22] qui propose la détection de l'hydrazine à partir des résonances de plasmons de nanoparticules d'argent à 415 nm. L'hydrazine réduit AgNOs en nanoparticule d'argent, en présence de stabilisant comme la polyvinylpyrrolidone ou le chlorure de dodécyldiméthylammonium. Cette méthode permet de détecter individuellement l'hydrazine, le phénylhydrazine et l'isoniazide, avec des limites de détection de 3,84 $\mu$g·L$^{-1}$ (hydrazine), 13 $\mu$g·L$^{-1}$ (phénylhydrazine) et 16,4 $\mu$g·L$^{-1}$ (isoniazide) respectivement, mais n'est pas sélective.

De toutes les méthodes de mesure de l'hydrazine dans l'eau répertoriées, seule celle avec le p-diméthylaminobenzaldéhyde (pDMAB) est sélective vis-à-vis de l'hydrazine et est utilisable à température ambiante dans la gamme de concentration d'hydrazine ciblée. La méthode est d'ailleurs utilisée industriellement mais le protocole indique une plage horaire de mesure de 16H, au bout de laquelle le produit coloré, la benzalazine, se dégrade. L'utilisation de cette méthode avec une mesure en différé à 24H n'est donc pas possible. Par ailleurs, cette méthode ne permet pas de détecter et quantifier les interférents tels que $NH_2EtOH$ ou la morpholine car les produits de la réaction, s'ils sont formés, absorberaient dans l'UV dans un domaine où l'absorbance est saturée par celle du pDMAB seul.

**Détection de l'hydrazine dans l'air**

Les méthodes de mesure de l'hydrazine dans l'air sont moins nombreuses que celles pour la phase liquide, notamment dans la gamme ciblée de 1,3 à 264 $\mu$g·m$^{-3}$ (soit de 1 à 200 ppb). La méthode actuelle de mesure est décrite dans la Fiche 21 de l'INRS. Elle repose sur l'utilisation du benzaldéhyde [23]. L'hydrazine est prélevée par aspiration d'air au travers d'un tube rempli d'un adsorbant inerte (Chromosorb P NAW ou équivalent) de granulométrie 3060 Mesh, imprégné d'acide sulfurique. Le contenu de la cartouche est désorbé à l'eau déionisée et une dérivation par le benzaldéhyde est réalisée. Le composé d'addition, la benzalazine, est mesuré en chromatographie en phase liquide (HPLC) couplée à une détection optique dans l'UV [24, 25]. Cette méthode permet de détecter 30 ppb d'hydrazine en 15 minutes de prélèvement. Une variante de cette méthode est l'utilisation d'une cassette contenant deux filtres en fibre de verre imprégnés d'acide sulfurique. L'extraction de l'hydrazine est réalisée avec une solution tampon d'EDTA et la dérivation est réalisée avec le benzaldéhyde. La benzalazine formée est mesurée en chromatographie en phase liquide couplée à une détection optique dans l'UV [26]. Cette méthode de dosage s'avère sensible, puisqu'il est possible de détecter 0,017 ppb de $N_2H_4$. Ces deux méthodes ne permettent pas une mesure directe sur site et l'interférence de fortes concentrations de $NH_3$ ou d'autres amines, 50 à 100 fois supérieure à celle de l'hydrazine n'est pas connue.

On trouve également des méthodes de mesure directe. Dans le cadre de la surveillance de l'exposition des travailleurs à l'hydrazine, au monométhylhydrazine (MMH) et au 1,1-diméthylhydrazine (UDMH) utilisés en tant que carburants pour les fusées dans les bases aériennes et dans les centres spatiaux aux États-Unis, plusieurs dosimètres colorimétriques ont été développés et commercialisés par des laboratoires [27, 28]. Le principe est basé sur l'incorporation d'un aldéhyde aromatique comme la vanilline, le para-diméthylaminobenzaldéhyde (pDMAB) ou le 2,4-Dinitrobenzaldéhyde sur un papier filtre ou une surface inerte. L'hydrazine et le MMH réagissent avec la vanilline ou avec le 2,4-Dinitrobenzaldéhyde pour former un composé de couleur jaune, tandis que le produit formé avec le pDMAB est orange. L'UDMH réagit avec le 2,4-Dinitrobenzaldéhyde pour former un composé de couleur jaune et il n'y a pas de réaction avec la vanilline et le pDMAB. Les dosimètres colorimétriques à base de la vanilline et du para-diméthylaminobenzaldéhyde sont commercialisés par la société DODTEC [29] et CHEMSEE [30]. Ils permettent d'estimer les teneurs de l'hydrazine, du monométhylhydrazine dans l'air dans la gamme allant de 0,025 à 1,2 ppm.

Dans le brevet US005719061A [31], Rose-Pehrsson et al. proposent un procédé permettant la détection et quantification sélective d'hydrazine, de monomethylhydrazine et de 1,1-dimethylhydrazine liquide ou gazeuse par dérivation avec des carboxyaldéhydes aromatiques et analyse fluorimétrique. La sélectivité est basée sur la réactivité de 3 agents de dérivation, l'ortho-phthalaldéhyde (OPA), le napthalene 2,3- dicarboxaldéhyde (NDA) et l'anthracene 2,3-dicarboxaldéhyde (ADA) avec l'hydrazine, la monomethylhydrazine et la 1,1-dimethylhydrazine en fonction du pH de la solution de réactif. Ces auteurs ont donc mis au point un dispositif complexe qui permet de pomper l'air ambiant pour le faire barboter dans une solution de réactif dont la composition (OPA ou NDA ou ADA) et le pH doivent être modifiés pour l'obtention de la sélectivité. Même si la limite de détection atteinte est de l'ordre du ppb, l'analyse du mélange gazeux à analyser nécessite de nombreuses étapes de changement de réactifs et de pH, suivies d'analyses fluorimétriques. Par ailleurs, il n'y a pas d'étude d'interférences, notamment avec d'autres amines à des concentrations 50 à 100 fois plus fortes, susceptibles de modifier le pH de la solution.

Pour des mesures précises, quelques appareils commerciaux existent. Le détecteur électrochimique portable de la société Interscan, modèle 4180-100b [32] permet de détecter l'hydrazine dans une plage plus faible allant de 0 à 100 ppb en moins de 1 seconde, avec une limite de détection de 10 ppb. La méthode n'est cependant pas sélective car le capteur détecte également $NH_3$, $NO_x$, CO et les autres amines organiques.

Une grande sensibilité peut aussi être obtenue à l'aide d'appareils équipés d'un détecteur à photoionisation (PID) comme ppbRAE 3000 de la société RAE [33]. Le détecteur à photoionisation, équipé d'une lampe de 10,6 eV, permet d'ioniser l'hydrazine et de mesurer quelques ppbs en 3 secondes. La détection n'est cependant pas sélective car un grand nombre de composés organiques volatils présents dans l'air dont le potentiel d'ionisation est inférieur à 10,6 eV sont également détectés, comme $NH_3$, l'éthanolamine et la morpholine.

L'ionisation de l'hydrazine suivie d'une mesure de mobilité des ions à l'aide de la spectrométrie à mobilité ionique, en anglais *Ion Mobility Spectrometer* (IMS) permet d'atteindre des teneurs de l'ordre de la dizaine de ppb (20 - 30 ppb) tout en étant sélectif avec le choix du gaz porteur **[Erreur ! Signet non défini.].** Avec l'utilisation d'une source radioactive, l'IMS (comme le détecteur portable SABRE 4000 [34] ou ChemPro100i d'Environics [35]) doit être sous la responsabilité d'une personne compétente en radioprotection. Cette technique est privilégiée par les armées et polices pour la détection des armes chimiques et des produits illicites. Son application dans le domaine public s'est développée plus récemment avec le développement de nouvelles sources d'ionisation non-radioactives (effet Corona) comme le détecteur portable PAIMS de la société MaSaTECH [36] ou LCD 3.3 de Smiths Détection [37].

L'état de l'art des mesures d'hydrazine montre que la seule méthode simple actuellement existante, utilisant comme réactif le pDMAB, peut être utilisée dans le compartiment eau avec une bonne sélectivité et sensibilité. Cependant, la benzalanine formée en solution est instable au bout de 16 H et la mesure ne peut pas être réalisée en différé au bout de 24H. Pour la mesure de l'hydrazine dans le compartiment air, l'INRS (Institut National de Recherche et de Sécurité pour la prévention des accidents du travail et des maladies professionnelles) utilise le benzaldéhyde. La méthode nécessite des étapes d'adsorption puis de désorption avant analyse, étapes difficilement réalisables sur le terrain. De plus, pour cette méthode, les interférences avec de fortes concentrations de $NH_3$, d'éthanolamine ou de morpholine ne sont pas connues ni dans l'eau ni dans l'air.

Il existe donc un réel besoin d'un procédé de détection et optionnellement de quantification de l'hydrazine utilisable dans les compartiments eau et air, sélectif de l'hydrazine, compatible avec la présence potentielle de fortes concentrations d'interférents, facile à mettre en oeuvre sur le terrain et qui permette de réaliser une mesure en différé jusqu'à au moins 24h.

Le procédé selon l'invention vient répondre à ces problématiques.

**Résumé**

Un premier objet de l'invention est un procédé de détection d'au moins un composé de type amine, ledit composé étant choisi parmi l'hydrazine, l'éthanolamine et la morpholine, à l'aide d'une composition de réactifs comprenant un mélange de 4-(diméthylamino)-cinnamaldéhyde et d'acide polystyrène sulfonique, ledit procédé comprenant les étapes de :

a) mélange dudit échantillon à analyser avec ladite composition de réactifs pour obtenir un mélange constitué de l'échantillon à analyser et de ladite composition de réactifs,

b) détection du ou des dit(s) composé(s) de type amine dans le mélange constitué de l'échantillon à analyser et de ladite composition de réactifs.

Un autre objet de l'invention est une composition de réactifs comprenant un mélange de 4-(diméthylamino)-cinnamaldéhyde et d'acide polystyrène sulfonique.

La présente invention a également pour objet l'utilisation d'une composition de réactifs comprenant un mélange de 4-(diméthylamino)-cinnamaldéhyde et d'acide polystyrène sulfonique pour la détection d'au moins un composé de type amine, ledit composé étant choisi parmi l'hydrazine, l'éthanolamine et la morpholine.

Un autre objet de l'invention est un kit de préparation de la composition de réactifs selon l'invention, ledit kit comprenant :

- un premier récipient comprenant du 4-(diméthylamino)-cinnamaldéhyde ;

- un deuxième récipient comprenant une solution aqueuse d'acide polystyrène sulfonique.

**Brève description des dessins**

D'autres caractéristiques, détails et avantages apparaîtront à la lecture de la description détaillée ci-après, et à l'analyse des dessins annexés, sur lesquels :

**Fig. 1**

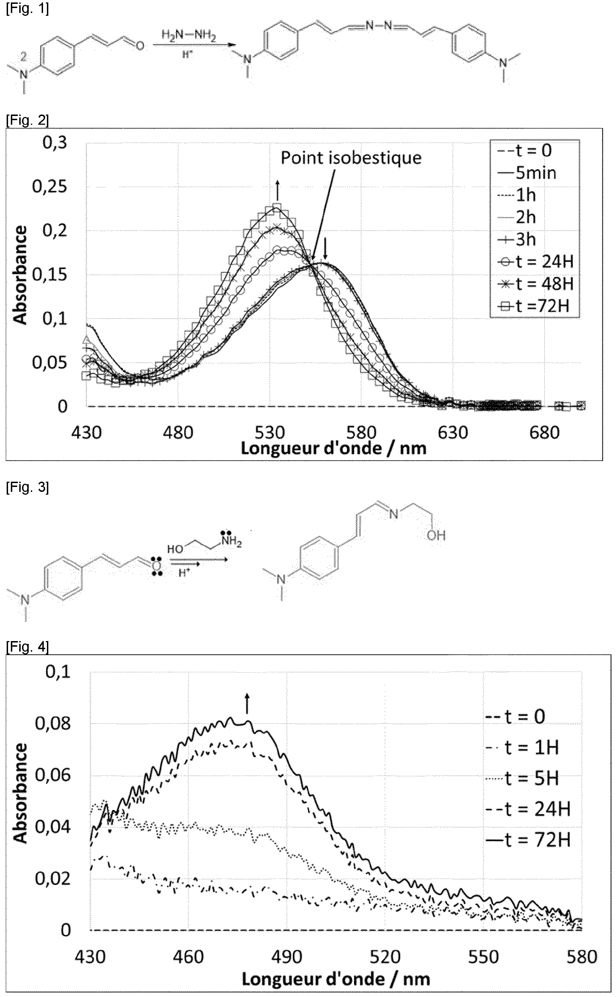

[Fig. 1] montre le schéma de la réaction entre $N_2H_4$ et 2 molécules de DMACA avec formation d'un produit coloré 2DMACA-$N_2H_4$ absorbant dans le visible

**Fig. 2**
[Fig. 2] montre les spectres différentiels obtenus à différents temps montrant l'évolution du complexe 2DMACA-$N_2H_4$ vers sa forme protonée avec la présence d'un point isobestique d'absorbance à 553 nm. Les conditions appliquées étant les suivantes : DMACA $5 \times 10^{-3}$M + PSS 9,2 g·L$^{-1}$ + $N_2H_4$ $5,5 \times 10^{-6}$M, cuve en quartz de parcours optique 1 cm.

**Fig. 3**
[Fig. 3] montre le schéma de la réaction entre $NH_2$EtOH et DMACA avec formation du complexe $NH_2$EtOH-DMACA absorbant à 474 nm.

**Fig. 4**
[Fig. 4] montre les spectres différentiels de la réaction entre DMACA et $NH_2$EtOH en fonction du temps. Les conditions appliquées étant les suivantes : DMACA $5 \times 10^{-3}$M + PSS 9,2 g·L$^{-1}$ + $NH_2$EtOH $6,24 \times 10^{-4}$M, cuve en quartz de parcours optique 1 cm.

**Fig. 5**

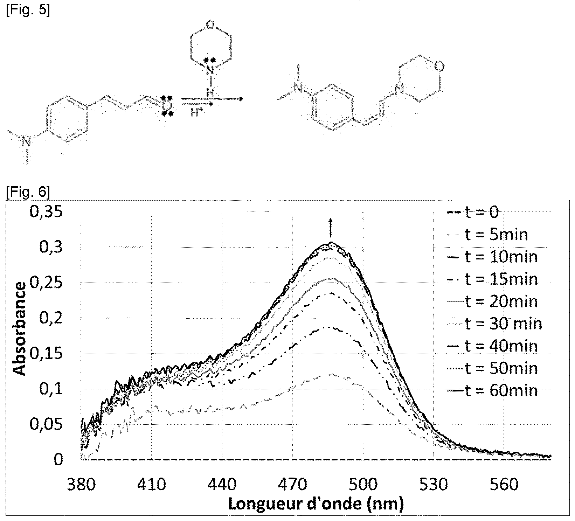

[Fig. 5] montre le schéma de la réaction entre la morpholine et DMACA avec formation du complexe morpholine-DMACA.

**Fig. 6**
[Fig. 6] montre l'évolution spectrale du complexe morpholine-DMACA en fonction du temps. Les conditions appliquées étant les suivantes : DMACA $5 \times 10^{-3}$M + PSS 9,2 g·L$^{-1}$ + morpholine $6,24 \times 10^{-4}$ M, cuve en quartz de parcours optique 1 cm.

**Fig. 7**

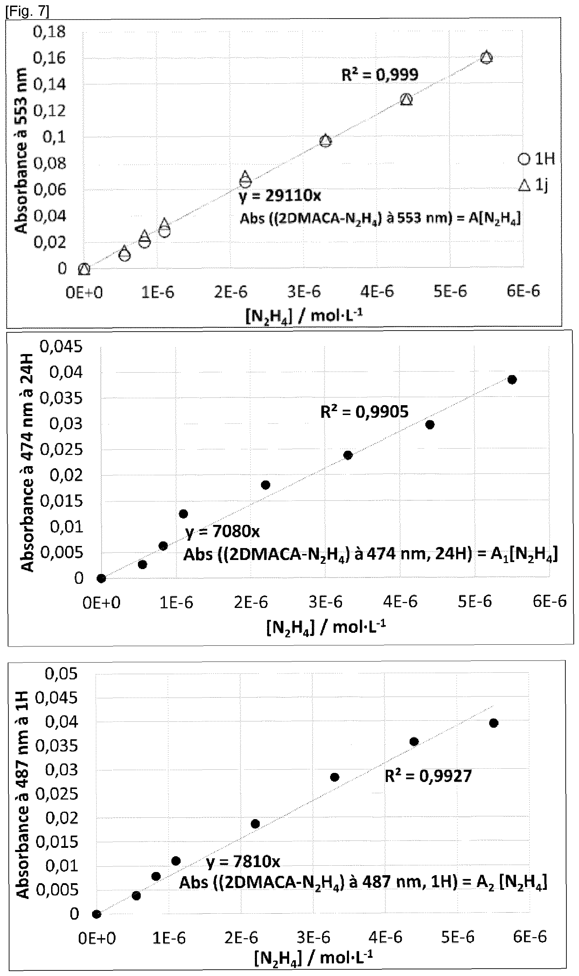

[Fig. 7] montre les droites d'étalonnage de la variation d'absorbance du composé d'addition 2DMACA-$N_2H_4$ en fonction de la concentration en [$N_2H_4$] entre $5 \times 10^{-7}$ et $5,5 \times 10^{-6}$ M. Les conditions appliquées étant les suivantes : à 553 nm (5 min, point isobestique), à 474 nm à 24h et à 487 nm à 1h, [DMACA] = $5 \times 10^{-3}$ M, [PSS] = 9,2 g·L$^{-1}$ soit r = [H$^+$]/[DMACA] = 10, parcours optique de 1 cm.

**Fig. 8**

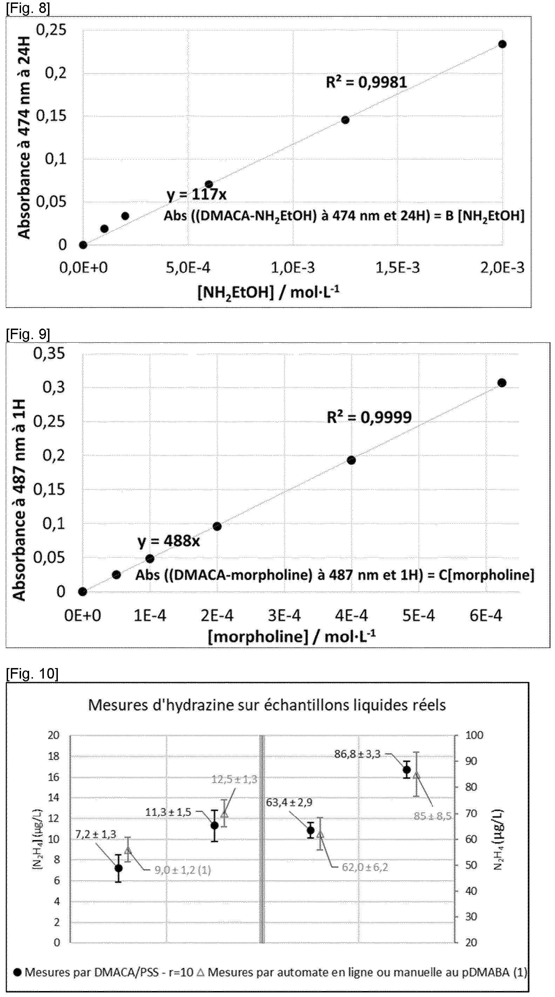

[Fig. 8] montre la droite d'étalonnage de la variation d'absorbance à 24H du composé d'addition DMACA-$NH_2$EtOH absorbant à 474 nm en fonction de la concentration de $NH_2$EtOH entre $1 \times 10^{-4}$ et $2 \times 10^{-3}$ M, à 24H. Les conditions appliquées étant les suivantes: parcours optique 1 cm. [DMACA] = $5 \times 10^{-3}$ M, [PSS] = 9,2 g·L$^{-1}$ soit r = [H$^+$]/[DMACA] = 10.

**Fig. 9**
[Fig. 9] montre la droite d'étalonnage de la variation d'absorbance à 1H du composé d'addition DMACA-morpholine absorbant à 487 nm en fonction de la concentration de morpholine entre $5 \times 10^{-5}$ et $6,24 \times 10^{-4}$ M à 1H. Les conditions appliquées étant les suivantes : parcours optique de 1 cm. [DMACA] = $5 \times 10^{-3}$ M, [PSS] = 9,2 g·L$^{-1}$ soit r = [H$^+$]/[DMACA] = 10.

**Fig. 10**

[Fig. 10] montre les mesures de $N_2H_4$ en présence des interférents ($NH_3$+$NH_2$EtOH ou $NH_3$+morpholine) sur site industriel et la comparaison de la méthode analytique DMACA/PSS (avec r= 10) avec la méthode analytique pDMAB (p-diméthylaminobenzaldéhyde ou pDMABA) et les mesures ampérométriques.

**Fig. 11**

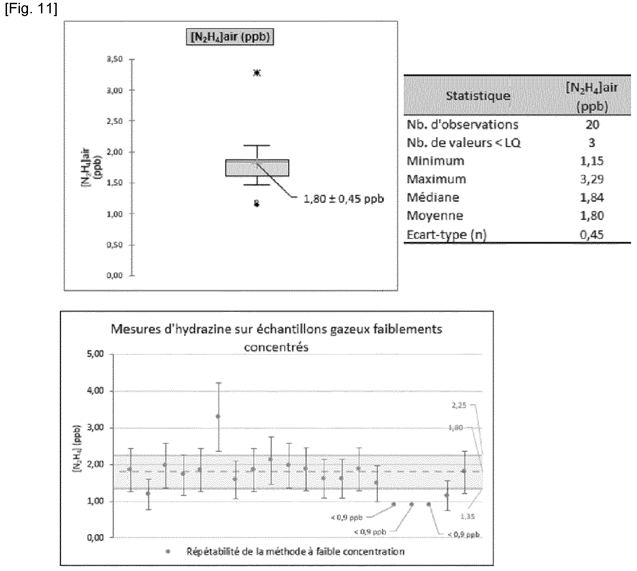

[Fig. 11] montre un test de répétabilité des mesures de faibles teneurs de $N_2H_4$. Les conditions appliquées étant les suivantes : 60 min de prélèvement à un débit de 1 L·min$^{-1}$ avec barbotage dans 50 mL d'une solution de réactifs (DMACA/PSS, r=10); avec P=101325 Pa ; R=8,3144621 J·K$^{-1}$·mol$^{-1}$ ; T=295 Kelvin.

**Description détaillée**

La présente invention a pour objet un procédé de détection dans un échantillon à analyser d'au moins un composé de type amine, ledit composé étant choisi parmi l'hydrazine, l'éthanolamine et la morpholine, à l'aide d'une composition de réactifs comprenant un mélange de 4-(diméthylamino)-cinnamaldéhyde et d'acide polystyrène sulfonique, ledit procédé comprenant les étapes de :

a) mélange dudit échantillon à analyser avec ladite composition de réactifs pour obtenir un mélange constitué de l'échantillon à analyser et de ladite composition de réactifs,

b) détection du ou des dit(s) composé(s) de type amine dans le mélange constitué de l'échantillon à analyser et de ladite composition de réactifs.

Outre la détection, le procédé selon l'invention peut également permettre la détermination dans un échantillon à analyser de la concentration d'au moins un composé de type amine, ledit composé étant choisi parmi l'hydrazine, l'éthanolamine et la morpholine. Ainsi, selon un mode de réalisation particulier, la présente invention porte sur un procédé de détection et de quantification dans un échantillon à analyser d'au moins un composé de type amine, ledit composé étant choisi parmi l'hydrazine, l'éthanolamine et la morpholine, à l'aide d'une composition de réactifs comprenant un mélange de 4-(diméthylamino)-cinnamaldéhyde et d'acide polystyrène sulfonique, ledit procédé comprenant les étapes de :

a) mélange dudit échantillon à analyser avec ladite composition de réactifs pour obtenir un mélange constitué de l'échantillon à analyser et de ladite composition de réactifs,

b) détection et quantification du ou des dit(s) composé(s) de type amine dans le mélange constitué de l'échantillon à analyser et de ladite composition de réactifs.

De façon avantageuse, le procédé selon l'invention permet la détection d'hydrazine, ainsi que sa quantification, malgré la présence dans l'échantillon à analyser d'interférents tels que l'ammoniac, l'éthanolamine ou la morpholine. Le procédé selon l'invention selon ce mode de réalisation particulier présente alors un réel avantage puisqu'il offre la possibilité de détecter et de quantifier ces composés de type amine en une seule étape.

Dans le contexte de la présente invention, on entend par quantification, la détermination de la concentration d'un composé au sein d'un échantillon à analyser.

Le procédé selon l'invention peut être avantageusement appliqué à un échantillon liquide ou gazeux ou un aérosol. Le procédé selon l'invention reste identique à appliquer que l'échantillon à analyser soit liquide ou gazeux ou un aérosol, seule la méthode de prélèvement de l'échantillon à analyser pourra différer. Au sens de la présente invention, on entend par échantillon liquide un échantillon sous forme de solution ou de suspension. Au sens de la présente invention, on entend par aérosol une suspension, dans l'air ou dans un gaz, de particules solides ou plus généralement liquides.

L'étape b) de détection ou de détection et de quantification du procédé selon l'invention peut notamment être réalisée par mesure en fonction du temps de l'absorbance du mélange constitué de l'échantillon à analyser et de ladite composition de réactifs. Cette étape b) est ainsi réalisée en solution.

Les avantages du procédé selon l'invention comparativement à ceux actuellement existants, en particulier celui utilisant le réactif pDMAB, sont nombreux:

- Il permet de détecter et optionnellement de quantifier sélectivement l'hydrazine ($N_2H_4$), en particulier via la mesure de l'absorbance en fonction du temps du composé d'addition 2DMACA-$N_2H_4$, dont le spectre d'absorption dans le visible s'étend entre 460 et 620 nm. Ces détection et quantification sont possibles et restent fiables malgré la présence de fortes concentrations d'interférents comparativement à la concentration d'hydrazine dans l'échantillon. Ainsi les concentrations des interférents peuvent être jusqu'à plus de 200 fois supérieures à celle de l'hydrazine sans que l'efficacité du procédé de détection de l'hydrazine ne soit altérée.

- Dans le cas d'une mesure par absorbance en fonction du temps (aussi appelée mesure colorimétrique) de l'hydrazine dans l'eau, celle-ci est facile, rapide et instantanée, par prélèvement d'un volume déterminé de la solution à analyser et mélange de ce dernier avec la solution de réactifs.

- Dans le cas d'une mesure par absorbance en fonction du temps, grâce à l'existence d'un point isobestique d'absorbance stable du spectre d'absorption du composé d'addition 2DMACA-$N_2H_4$, la mesure d'hydrazine via l'absorbance du complexe d'addition en ce point peut être instantanée ou être réalisée en différé, jusqu'à 3 jours après car les inventeurs ont démontré que le point isobestique est stable pendant au moins 3 jours. L'expérimentateur peut ainsi disposer d'une mesure instantanée de la concentration d'hydrazine, par exemple à 5 min, et de 3 jours par exemple pour la vérifier ultérieurement s'il le souhaite. Le point isobestique correspond à une longueur d'onde à laquelle l'absorbance est constante au cours d'une réaction chimique. Ainsi, dans le cas présent, la réaction chimique met en jeu un produit de départ (ici, le 2DMACA-$N_2H_4$) et un produit d'arrivée (le 2DMACA-$N_2H_4$ protoné), qui ont le même coefficient d'absorption à cette longueur d'onde.

- La mesure d'hydrazine dans l'air est réalisée avec la même méthode analytique que lorsque l'échantillon est liquide, moyennant le prélèvement à vitesse constante de l'air à analyser et son barbotage dans la solution de réactifs pendant une durée déterminée. Du fait de sa forte solubilité, $N_2H_4$ gazeux contenu dans l'air prélevé est instantanément dissous dans la solution de réactifs et la mesure de $N_2H_4$ est réalisée à partir de l'absorbance du complexe d'addition 2DMACA-$N_2H_4$ au point isobestique.

- Il permet de mesurer les concentrations des interférents, l'éthanolamine ($NH_2EtOH$) ou la morpholine, en solution notamment via la mesure de l'absorbance en fonction du temps des composés d'addition DMACA-$NH_2EtOH$ ou DMACA-morpholine dont les spectres d'absorption diffèrent de celui de 2DMACA-$N_2H_4$.

- La quantification de l'éthanolamine ou de la morpholine présente dans l'air est également possible via leur dissolution dans la solution de réactifs et la détermination de l'absorbance en fonction du temps des complexes colorés DMACA-$NH_2EtOH$ ou DMACA-morpholine.

La méthode analytique qui permet la détermination des teneurs de l'hydrazine et des interférents porteurs d'une fonction amine primaire ou secondaire par des mesures d'absorbance en fonction du temps implique la connaissance des spectres d'absorption de la solution de réactifs, des complexes d'addition 2DMACA-$N_2H_4$ et des complexes d'addition du DMACA avec les interférents que sont l'éthanolamine ($NH_2EtOH$) et la morpholine.

Cette méthode de mesure de l'hydrazine en présence de 2 interférents, $NH_2EtOH + NH_3$ ou morpholine + $NH_3$, comprend avantageusement la succession d'étapes détaillées ci-après.

En solution aqueuse, la réaction entre l'hydrazine ($N_2H_4$) et le 4-(diméthylamino)-cinnamaldéhyde (DMACA) catalysée en présence de l'acide polystyrène sulfonique donne lieu à la formation du complexe d'addition 2DMACA-$N_2H_4$ de couleur rouge ([Fig.1] et [Fig.2]).

La présence de l'acide polystyrène sulfonique est nécessaire pour protoner le DMACA et faciliter l'addition de $N_2H_4$ sur DMACA. Cependant, la protonation de $N_2H_4$ pourrait aussi avoir lieu en milieu acide. Cette réaction inhiberait la formation du complexe d'addition 2DMACA-$N_2H_4$. La quantité d'acide nécessaire à la réaction entre $N_2H_4$ et DMACA doit donc être choisie de façon à favoriser cette réaction tout en minimisant la protonation de $N_2H_4$.

Le procédé selon l'invention est ainsi avantageusement mis en oeuvre avec un ratio r des concentrations d'acide polystyrène sulfonique et de 4-(diméthylamino)-cinnamaldéhyde allant de 1 à 20 de préférence de 2 à 15, encore plus préférentiellement 10.

Ce ratio est calculé à partir des concentrations molaires de l'acide polystyrène sulfonique et du 4-(diméthylamino)-cinnamaldéhyde (r = [H'] / [DMACA]). Pour ce calcul, on utilise la masse molaire du monomère d'acide polystyrène sulfonique (M = 184 g/mol) afin de convertir la concentration massique de l'acide polystyrène sulfonique (PSS) en concentration molaire. Par exemple, une concentration de PSS de 9,2 g.L$^{-1}$ correspond à une concentration de 0,05 mol.L$^{-1}$ (= 9,2 / 184). Ainsi avec une concentration en DMACA de 5.10$^{-3}$ mol.L$^{-1}$ et une concentration en PSS de 9,2 g.L$^{-1}$ (0,05 mol.L$^{-1}$), le ratio r est égal à 10.

Les tests réalisés avec des quantités différentes d'acide PSS, 1,84 - 3,68 - 5,98 et 9,2 g·L$^{-1}$ soit avec des rapports r = [H$^+$] / [DMACA] égaux à 2 - 4 - 6,5 et 10 montrent que, quelle que soit l'acidité du milieu la formation instantanée d'un produit absorbant à 558 nm correspondant au composé d'addition, 2DMACA-$N_2H_4$. Il y a par ailleurs une évolution du produit absorbant à 558 nm vers sa forme protonée absorbant à 535 nm avec l'apparition d'un point isobestique stable pendant 3 jours. La longueur d'onde correspondant au point isobestique varie avec le ratio r et évolue entre 553 nm (r = 10) et 538 nm (r = 2).

Le ratio des concentrations d'acide polystyrène sulfonique et de 4-(diméthylamino)-cinnamaldéhyde et peut également être exprimé avec un ratio r' des concentrations massiques des deux espèces (r' = [H'] / [DMACA]), ce ratio r' allant de 1 à 20, de préférence de 2 à 15, encore plus préférentiellement 11. Par exemple, avec une concentration en DMACA de $5.10^{-3}$ mol.$L^{-1}$ correspondant à 0,876 g.$L^{-1}$ (avec M = 175,23 g.$mol^{-1}$) et une concentration en PSS de 9,2 g.$L^{-1}$, le ratio r' est égal à 10,5.

Le DMACA réagit également avec d'autres amines comme $NH_2EtOH$ pour donner le complexe $NH_2EtOH$-DMACA absorbant à 474 nm ([Fig.3] et [Fig.4]).

La Fig 4 montre la formation du complexe $NH_2EtOH$-DMACA et son évolution au cours du temps. Le maximum d'absorption du complexe se situe à 474 nm dans un domaine où le complexe $2DMACA$-$N_2H_4$ et sa forme protonée n'absorbent pratiquement pas. La réaction entre DMACA et $NH_2EtOH$ est beaucoup plus lente qu'entre DMACA et $N_2H_4$. Pour la détermination de la concentration de $NH_2EtOH$, le facteur temporel est pris en compte pour la courbe d'étalonnage.

En présence de morpholine, le composé d'addition morpholine-DMACA est formé et absorbe à 487nm (Fig 5). La vitesse de formation de morpholine-DMACA est plus rapide que celle d'Ethanolamine-DMACA. L'absorbance à 487 nm atteint un plateau au bout de 1H (Fig 6).

Selon un mode de réalisation particulier, le procédé de détection ou de détection et de quantification selon l'invention peut être mis en oeuvre selon les étapes suivantes :

1. Préparation de la solution de réactifs par mélange de DMACA et de PSS dans l'eau ;

2. Etablissement des courbes d'étalonnage de $N_2H_4$ à partir de l'absorbance du complexe d'addition $2DMACA$-$N_2H_4$ à des longueurs d'onde données, par exemple au point isobestique à 553 nm, à 487nm (t=1H) et à 474 nm (t=24H) ;

3. Etablissement de la courbe d'étalonnage des autres composés de type amine (interférents) à des longueurs d'onde données, par exemple 474 nm pour l'éthanolamine et 487 nm pour la morpholine;

4. Préparation de l'échantillon à analyser par mélange de la solution de réactifs et de l'échantillon prélevé ;

5. Mesure de l'absorbance de l'échantillon à analyser en fonction du temps (par exemple à 5 min, 1H et 24H);

6. Calcul des concentrations de $N_2H_4$ et des autres composés de type amine (interférents) à partir des spectres d'absorbance en fonction du temps de l'échantillon à analyser et des équations des courbes d'étalonnage préalablement obtenues.

Selon un mode de réalisation particulier, le procédé de détection et de quantification de $N_2H_4$ et de $NH_2EtOH$ (ou morpholine) dans l'eau selon l'invention peut être réalisé en suivant les étapes suivantes :

**1.Préparation de la solution de réactifs par mélange de quantités définies de DMACA et de PSS dans l'eau.**

Une solution mère de réactifs est alors obtenue avec des concentrations finales de DMACA et de PSS connues et un rapport r de ces concentrations = [$H^+$]/[DMACA] également défini.

**2.Etablissement des courbes d'étalonnage de $N_2H_4$ à partir de l'absorbance du complexe d'addition $2DMACA$-$N_2H_4$ au point isobestique à 553 nm, à 487nm (t=1H) et à 474 nm (t=24H)**

Les courbes d'étalonnage de $N_2H_4$ sont réalisées en ajoutant un volume x (par exemple 5 mL) de solution contenant des concentrations variables de $N_2H_4$, dans la gamme de $5 \times 10^{-7}$ à $5,5 \times 10^{-6}$ mol·$L^{-1}$, au même volume x de la solution de réactifs préparée à l'étape 1. Les solutions obtenues sont étudiées par spectrophotométrie UV-visible entre 5 min et 24H en utilisant une cellule en quartz de 1 cm de trajet optique.

Les courbes d'étalonnage sont établies à différentes longueurs d'onde (Fig 7) : 553 nm (point isobestique), 474 nm (pic d'absorption de $NH_2EtOH$) à 24H et 487nm (pic d'absorption de morpholine) à 1H. Le tracé des droites correspondant à l'évolution temporelle de l'absorbance en fonction de la concentration de $N_2H_4$ permet d'obtenir par régression linéaire, les équations suivantes :

- Au point isobestique, Abs (($2DMACA$-$N_2H_4$) à 553 nm) = A [$N_2H_4$]

- À 474 nm et à 24H, Abs (($2DMACA$-$N_2H_4$) à 474 nm, 24H) = $A_1$ [$N_2H_4$]

- À 487 nm et à 1H, Abs (($2DMACA$-$N_2H_4$) à 487 nm, 1H) = $A_2$ [$N_2H_4$].

**3. Etablissement de la courbe d'étalonnage de l'interférent $NH_2EtOH$ ou morpholine**

**3.a. Etablissement de la courbe d'étalonnage de l'interférent NH$_2$EtOH à partir de la mesure d'absorbance du complexe DMACA-NH$_2$EtOH au pic d'absorption à 474 nm**

La courbe de calibration de NH$_2$EtOH est réalisée en ajoutant un volume x (par exemple 5 mL) de solution contenant des concentrations variables de NH$_2$EtOH, dans la gamme de $1 \times 10^{-4}$ à $2 \times 10^{-3}$ mol·L$^{-1}$, dans le même volume x de la solution de réactifs préparée à l'étape 1.

La courbe de calibration du composé d'addition DMACA-NH$_2$EtOH est réalisée en mesurant l'absorbance à 474 nm, à 24H avec une cellule en quartz de 1 cm de trajet optique. Le tracé de la droite correspondant à l'évolution de l'absorbance à 24H en fonction de la concentration de NH$_2$EtOH permet d'obtenir par régression linéaire, l'équation suivante : Abs ((DMACA-NH$_2$EtOH) à 474 nm et 24H) = B [NH$_2$EtOH] (Fig 8).

**3.b. Etablissement de la courbe d'étalonnage de l'interférent morpholine à partir de la mesure d'absorbance du complexe DMACA-morpholine au pic d'absorption à 487 nm.**

La courbe de calibration de morpholine est réalisée en ajoutant un volume x (par exemple 5 mL) de solution contenant des concentrations variables de morpholine, dans la gamme de $5 \times 10^{-5}$ à $6,24 \times 10^{-4}$ mol·L$^{-1}$, dans le même volume x de la solution de réactifs préparée à l'étape 1.

La courbe de calibration du composé d'addition DMACA-morpholine est réalisée en mesurant l'absorbance à 487 nm, à 1H avec une cellule en quartz de 1 cm de trajet optique. Le tracé de la droite correspondant à l'évolution de l'absorbance à 1H en fonction de la concentration de morpholine permet d'obtenir par régression linéaire, l'équation suivante :

$$\text{Abs ((DMACA-morpholine) à 487 nm et 1H) = C [morpholine] (Fig 9)}$$

**4. Echantillonnages**

Le prélèvement de l'échantillon à analyser, contenant N$_2$H$_4$ et NH$_2$EtOH (ou N$_2$H$_4$ et morpholine) est réalisé comme suit :

- Dans une fiole jaugée, on introduit un volume x (par exemple 5 mL) de la solution de réactifs, puis le même volume x d'échantillon à analyser. Les concentrations réelles des analytes ayant été ainsi diluées de moitié dans ce mélange dont sera mesuré l'absorbance, il est nécessaire de tenir compte de cette dilution par un coefficient 2 lors des calculs des concentrations.

- Le spectre d'absorption du mélange composé de la solution de réactifs et de l'échantillon à analyser est collecté entre 400 et 700 nm à 5 min et à 24H lorsque l'interférent est NH$_2$EtOH

- Le spectre d'absorption du mélange composé de la solution de réactifs et de l'échantillon à analyser est collecté entre 400 et 700 nm à 5 min et à 1H lorsque l'interférent est morpholine.

**5. Calculs**

**5.a. Le calcul de concentration de N$_2$H$_4$ dans le mélange contenant N$_2$H$_4$ et NH$_2$EtOH (ou morpholine) est le suivant :**

L'absorbance (Abs) du composé d'addition 2DMACA-N$_2$H$_4$ est mesurée au point isobestique de 2DMACA-N$_2$H$_4$ et 2DMACA-N$_2$H$_4$ protoné, à 553 nm lorsque r= 10.

La concentration de N$_2$H$_4$ de l'échantillon en mol·L$^{-1}$ est déduite à l'aide de la courbe de calibration préalablement réalisée au point isobestique Abs ((2DMACA-N$_2$H$_4$) à 553 nm) = A [N$_2$H$_4$], selon l'équation :

$$[\text{N}_2\text{H}_4] = \frac{\text{Abs ((2DMACA-N2H4) à 553 nm)}}{A} \, 2$$

**5.b. Lorsque l'interférent est NH$_2$EtOH, le calcul de concentration de NH$_2$EtOH dans le mélange contenant N$_2$H$_4$ et NH$_2$EtOH est le suivant :**

A partir de la concentration de N$_2$H$_4$ obtenue en 5.a., l'absorbance de 2DMACA-N$_2$H$_4$ à 474 nm et à 24H est obtenue à partir de la courbe d'étalonnage Abs ((2DMACA-N$_2$H$_4$) à 474 nm, 24H) = A$_1$ [N$_2$H$_4$], obtenue en 2.

L'absorbance de DMACA-NH$_2$EtOH dans le mélange à 24H est déduite :

$$Abs\ ((DMACA\text{-}NH_2EtOH)\ \text{à } 474\ nm) = Abs\ ((mélange)\ \text{à } 474\ nm) - Abs\ ((2DMACA\text{-}N_2H_4)\ \text{à } 474\ nm)$$

La concentration de NH$_2$EtOH en mol·L$^{-1}$ de l'échantillon est déduite de la courbe de d'étalonnage Abs (DMACA-NH$_2$EtOH) = B [NH$_2$EtOH] obtenue en 3.a. (Figure 8):

$$[\mathrm{NH_2EtOH}] = 2\,\frac{Abs\ ((\mathrm{DMACA-NH_2EtOH})\ \text{à } 474\ nm)}{B}$$

**5.c. Lorsque l'interférent est la morpholine, le calcul de concentration de morpholine dans le mélange contenant N$_2$H$_4$ et morpholine est le suivant :**

A partir de la concentration de N$_2$H$_4$ obtenue en 5.a., l'absorbance de 2DMACA-N$_2$H$_4$ à 487 nm à 1H est obtenue à partir de la courbe d'étalonnage Abs ((2DMACA-N$_2$H$_4$) à 487 nm, 1H) = A$_2$ [N$_2$H$_4$], obtenue en 2. (Figure 7).

L'absorbance de DMACA-morpholine dans le mélange à 1H est déduite :

$$Abs\ ((DMACA\text{-}morpholine)\ \text{à } 487nm) = Abs\ ((mélange)\ \text{à } 487nm) - Abs\ ((2DMACA\text{-}N_2H_4)\ \text{à } 487nm,\ 1H)$$

La concentration de morpholine en mol·L$^{-1}$ de l'échantillon, est déduite de la courbe de d'étalonnage Abs (DMACA-morpholine) = C [morpholine] obtenue en 3.b. (Figure 9):

$$[\mathrm{morpholine}] = 2\,\frac{(Abs)\ \text{à } 487\ nm}{\mathrm{C}}$$

Selon un autre mode de réalisation particulier, lorsque l'échantillon à analyser est un échantillon gazeux, les étapes du procédé de détection et de quantification de N$_2$H$_4$ et de NH$_2$EtOH (ou morpholine) selon l'invention peuvent être identiques à celles décrites ci-dessus pour un échantillon à analyser liquide. Néanmoins, le procédé de détection et de quantification de N$_2$H$_4$ et de NH$_2$EtOH (ou morpholine) gazeux nécessite une étape supplémentaire comparativement au même procédé appliqué à un échantillon en solution aqueuse. Cette étape supplémentaire correspond à la collecte de l'air ambiant à analyser pour le faire barboter dans le mélange de réactifs liquides.

Ainsi l'étape d'échantillonnage peut être réalisée de la façon suivante : l'air à analyser est pompé avec un débit connu (par exemple de 1L·min$^{-1}$) au travers d'un barboteur rempli d'un volume connu (par exemple 50 mL) du mélange de réactifs DMACA et PSS. Au bout d'une heure, la solution est prélevée pour l'analyse spectrophotométrique.

Le spectre du mélange est alors collecté entre 400 et 700 nm à 5 min et au bout de 24H lorsque l'interférent est NH$_2$EtOH. Le spectre du mélange est collecté entre 400 et 700 nm à 5 min et au bout de 1H lorsque l'interférent est morpholine.

Une étape suivante de calculs permet de déterminer les concentrations de N$_2$H$_4$ et de NH$_2$EtOH (ou morpholine) dissous dans le réactif. Pour retrouver les concentrations de ces analytes dans le mélange gazeux, il faut tenir compte du volume total de gaz pompé (par exemple à un flux de 1L·min$^{-1}$) pendant 1 heure.

**5'.a. Le calcul de concentration de N$_2$H$_4$ dans le mélange contenant N$_2$H$_4$ et NH$_2$EtOH (ou morpholine) est le suivant :**

L'absorbance (Abs) du composé d'addition 2DMACA-N$_2$H$_4$ est mesurée au point isobestique des complexes 2DMACA-N$_2$H$_4$ et 2DMACA- N$_2$H$_4$ protoné, à 553 nm lorsque r= 10 La concentration de N$_2$H$_4$ de l'échantillon en mol·L$^{-1}$ est déduite à l'aide de la courbe de calibration préalablement réalisée au point isobestique Abs ((2DMACA-N$_2$H$_4$) à 553 nm) = A [N$_2$H$_4$], selon l'équation :

$$[N_2H_4] = \frac{\text{Abs ((2DMACA}-\text{N2H4) à 553 nm)}}{A}$$

**5'.b. Le calcul de concentration de NH$_2$EtOH dans le mélange contenant N$_2$H$_4$ et NH$_2$EtOH est le suivant :**

A partir de la concentration de N$_2$H$_4$ obtenue en 5'.a., l'absorbance de 2DMACA-N$_2$H$_4$ à 474 nm et à 24H est obtenue à partir de la courbe d'étalonnage Abs ((2DMACA-N$_2$H$_4$) à 474 nm, 1H) = A$_1$ [N$_2$H$_4$], obtenue en 2.
L'absorbance de DMACA-NH$_2$EtOH dans le mélange à 24H est déduite de :

*Abs* ((DMACA-NH$_2$EtOH) à 474 nm) = *Abs* ((mélange) à 474 nm) − *Abs* ((2DMACA-N$_2$H$_4$) à 474 nm)

La concentration de NH$_2$EtOH en mol·L$^{-1}$ de l'échantillon est déduite de la courbe d'étalonnage Abs((DMACA-NH$_2$EtOH) à 474 nm) = B [NH$_2$EtOH] obtenue en 3.a. :

$$[NH_2EtOH] = \frac{Abs\ (\text{DMACA}-\text{NH}_2\text{EtOH) à 474 } nm}{B}$$

**5'.c. Lorsque l'interférent est morpholine, le calcul de concentration de morpholine dans le mélange contenant N$_2$H$_4$ et NH$_2$EtOH est le suivant :**

A partir de la concentration de N$_2$H$_4$ obtenue en 5'.a., l'absorbance de 2DMACA-N$_2$H$_4$ à 487 nm à 1H est obtenue à partir de la courbe d'étalonnage Abs ((2DMACA-N$_2$H$_4$) à 487 nm) = A$_2$ [N$_2$H$_4$], obtenue en 2.
L'absorbance de DMACA-morpholine dans le mélange à 1H est déduite :

*Abs* ((DMACA-morpholine) à 487nm) = *Abs* ((mélange) à 487nm) − *Abs* ((2DMACA-N$_2$H$_4$) à 487nm)

La concentration de morpholine en mol·L$^{-1}$ de l'échantillon, est déduite de la courbe de d'étalonnage Abs(DMACA-morpholine) à 487 nm) = C [morpholine] obtenue en 3.b. :

$$[morpholine] = \frac{Abs\ (\text{DMACA}-\text{morpholine) à 487 nm}}{C}$$

**5'.d. La teneur de N$_2$H$_4$ (ou de NH$_2$EtOH ou de morpholine) dans le mélange gazeux en ppb est déduite selon l'équation :**

$$[i]\ (ppb) = \frac{nombre\ de\ mole\ de\ i}{nombre\ de\ mole\ d'air} * 10^9$$

Avec :

- i = N$_2$H$_4$, NH$_2$EtOH, ou morpholine
- nombre de mole de i = [i] (mol · L$^{-1}$) * V (V = volume de la solution de réactif = par exemple $50 \times 10^{-3}$ L)
- $[nombre\ de\ mole\ d'air] = \frac{D*t}{V_m}$ (D = débit d'air = par exemple 1 L·min$^{-1}$, t = durée de l'échantillonnage = 1H, V$_m$ = volume molaire d'air = 24,21 L·mol$^{-1}$ à 22°C)

Outre le procédé de détection tel que défini précédemment, la présente invention a également pour objet une composition de réactifs comprenant un mélange de 4-(diméthylamino)-cinnamaldéhyde et d'acide polystyrène sulfonique. Cette composition permet avantageusement dans un milieu comprenant un composé de type amine, par exemple l'hydrazine, l'éthanolamine ou la morpholine, la réaction entre le composé de type amine et le 4-(diméthylamino)-cinnamaldéhyde, cette réaction étant catalysée par l'acide polystyrène sulfonique et donnant lieu à la formation d'un complexe d'addition ayant des propriétés d'absorbance dans le domaine UV-visible.
La réaction entre le composé de type amine et le 4-(diméthylamino)-cinnamaldéhyde (DMACA) est avantageusement catalysée par un acide dérivé d'un polymère, en particulier l'acide polystyrène sulfonique. Le choix de ce type d'acide et en particulier de l'acide polystyrène sulfonique a de nombreux avantages. Tout d'abord, cet acide est un polymère de haut poids moléculaire qui comporte une fonction acide SO₃H pour chaque monomère styrénique. De ce fait, le nombre de protons disponibles est particulièrement élevé et permet d'ajuster l'acidité de la solution pour catalyser la réaction entre le DMACA et $N_2H_4$. Par ailleurs, les acides inorganiques et les acides organiques de petit poids moléculaire présentent l'inconvénient de possibles dégagements de vapeur d'acide lors de l'étape de barbotage du mélange gazeux à analyser, l'acide étant donc susceptible de s'évaporer lors du barbotage. Cet inconvénient n'est pas présent pour les acides dérivés d'un polymère, comme l'acide polystyrène sulfonique, car ceux-ci ne sont pas volatils.

Un des avantages majeurs de cette composition de réactifs est sa stabilité dans le temps qui peut aller jusqu'à au moins une semaine. Cette stabilité a été démontrée par les inventeurs par la mesure du spectre d'absorbance de la composition de réactifs jusqu'à une semaine après sa préparation. Le spectre obtenu était identique à celui obtenu directement après la préparation de la composition. La composition peut ainsi être préparée et stockée pendant cette durée sans que son efficacité dans le procédé selon l'invention en soit altérée. Cette caractéristique supprime avantageusement la contrainte de devoir préparer la composition de réactifs avant chaque processus d'analyse d'un échantillon.

Selon un mode de réalisation particulier, la composition selon l'invention est caractérisée par un ratio r particulier des concentrations de 4-(diméthylamino)-cinnamaldéhyde et d'acide polystyrène sulfonique, ce ratio allant de 1 à 20 de préférence de 2 à 15, encore plus préférentiellement 10.

La présente invention a également pour objet l'utilisation d'une composition de réactifs selon l'invention pour la détection d'au moins un composé de type amine, ledit composé étant choisi parmi l'hydrazine, l'éthanolamine et la morpholine.

Selon un mode de réalisation particulier, l'invention porte également sur l'utilisation d'une composition de réactifs selon l'invention pour la quantification d'au moins un composé de type amine, ledit composé étant choisi parmi l'hydrazine, l'éthanolamine et la morpholine.

L'utilisation selon l'invention peut avantageusement être réalisée sur un échantillon liquide ou gazeux ou un aérosol.

Un autre objet de la présente invention est un kit de préparation d'une composition de réactifs selon l'invention, ledit kit comprenant :

- un premier récipient comprenant du 4-(diméthylamino)-cinnamaldéhyde ;
- un deuxième récipient comprenant une solution aqueuse d'acide polystyrène sulfonique. Le kit selon l'invention permet avantageusement de préparer la composition de réactifs selon l'invention en vue de son utilisation dans le procédé selon l'invention. Cette préparation est particulièrement simple et rapide à mettre en oeuvre puisqu'elle ne nécessite que le mélange de deux composés dans de l'eau.

**Exemples**

**Composés utilisés**

- 4-(Diméthylamino)cinnamaldéhyde (DMACA, Sigma-Aldrich, Réf: D4506-5g, lot: BCBX0916, CAS : 6203-18-5, pureté ≥98%, Masse molaire = 175,23 g/mol),

- Acide polystyrène sulfonique à 18% dans l'eau (PSS, Sigma-Aldrich, Réf: 561223-100G, lot: MKBV7207V, CAS : 28210-41-5, Masse molaire ~ 75 000 g/mol, densité = 1,11 g/mL à 25°C),

- Hydrate d'hydrazine à 50-60% dans l'eau ($N_2H_4$, Sigma-Aldrich, Réf: 225819-100mL, lot: BCCC1556, CAS : 10217-52-4, Masse molaire = 32,05 g/mol, densité = 1,029 g/mL à 25°C),

- Ethanolamine ($NH_2EtOH$, Sigma-Aldrich, Réf: 398136-500ML, lot: STBJ4500, CAS : 141-43-5, pureté ≥98%, Masse molaire = 61,08 g/mol, densité = 1,012 g/mL à 25°C),

- Morpholine (Sigma-Aldrich, Réf: 252360-100ML, lot: MCKM6935, CAS : 110-91-8, pureté ≥99%, Masse molaire = 87,012 g/mol, densité = 0,996 g/mL à 25°C),

- Solution aqueuse d'ammoniaque à 28% ($NH_3$, VWR, Réf: 21182.94, lot: 15J260522, CAS : 1336-21-6, Masse molaire = 17,03 g/mol, densité = 0,89 g/mL),

- Eau déionisée Milli-Q®.

**Exemple 1 : Protocole de dosage de N$_2$H$_4$ et de NH$_2$EtOH (ou morpholine) dans des solutions aqueuses avec la solution de réactifs contenant [DMACA] = 5 × 10$^{-3}$ M, [PSS] = 9,2 g·L$^{-1}$ soit r = [H$^+$]/[DMACA] = 10**

Le dosage de N$_2$H$_4$ et de NH$_2$EtOH (ou morpholine) dans l'eau est réalisé comme suit :

1) Préparation de la solution de réactifs : Dans une fiole jaugée de 50 mL contenant 25 mL d'eau, sont introduits 87,62 mg de DMACA et 4,604 mL de PSS à 18%. L'eau est ajoutée jusqu'au trait de jauge puis la solution est soniquée dans un bac à ultrasons pendant 30 minutes pour bien solubiliser le DMACA. On obtient une solution mère de réactifs avec les concentrations finales de DMACA et de PSS de 0,01 M et de 18,4 g·L$^{-1}$, respectivement. Le rapport r = [H$^+$]/[DMACA = 10.

2) Etablissement des courbes d'étalonnage de N$_2$H$_4$ à partir de l'absorbance du complexe d'addition 2DMACA-N$_2$H$_4$ au point isobestique à 553 nm, à 487nm (t=1H) et à 474 nm (t=24H), pour r = [H$^+$]/[DMACA] = 10)

a) Les courbes d'étalonnage de N$_2$H$_4$ sont réalisées en ajoutant 5 mL de solution contenant des concentrations variables de N$_2$H$_4$, dans la gamme de 5 × 10$^{-7}$ à 5,5 × 10$^{-6}$ mol·L$^{-1}$, à 5 mL de solution de réactifs préparée à l'étape 1). Les solutions sont étudiées par spectrophotométrie UV-visible entre 5 min et 24H en utilisant une cellule en quartz de 1 cm de trajet optique. Les courbes d'étalonnage sont établies à différentes longueurs d'onde ([Fig. 7]) : 553 nm (point isobestique), 474 nm (pic d'absorption de NH$_2$EtOH) à 24H et 487nm (pic d'absorption de morpholine) à 1H :

-   Au point isobestique, Abs (553 nm) = Ax = 29110 [N$_2$H$_4$]
-   À 474 nm et à 24H, Abs (474 nm, 24H) = A$_1$x = 7080 [N$_2$H$_4$]
-   À 487 nm et à 1H, Abs (487 nm, 1H) = A$_2$x = 7810[N$_2$H$_4$]

3) Etablissement de la courbe d'étalonnage de l'interférent NH$_2$EtOH ou morpholine

a) Etablissement de la courbe d'étalonnage de l'interférent NH$_2$EtOH à partir de la mesure d'absorbance du complexe DMACA-NH$_2$EtOH au pic d'absorption à 474 nm à 24H

La courbe de calibration de NH$_2$EtOH est réalisée en ajoutant 5 mL de solution contenant des concentrations variables de NH$_2$EtOH, dans la gamme de 1 × 10$^{-4}$ à 2 × 10$^{-3}$ mol·L$^{-1}$, dans 5 mL de la solution de réactifs préparée à l'étape 1). La courbe de calibration du composé d'addition DMACA-NH$_2$EtOH est réalisée en mesurant l'absorbance à 474 nm, à 24H avec une cellule en quartz de 1 cm de trajet optique.

$$\text{Abs (DMACA-NH}_2\text{EtOH) à 474 nm et 24H} = Bx = 117 \, [\text{NH}_2\text{EtOH}] \, (\text{[Fig. 8]})$$

b) Courbe de calibration de l'interférent morpholine à partir de la mesure d'absorbance du complexe DMACA-morpholine au pic d'absorption à 487 nm.

La courbe de calibration de morpholine est réalisée en ajoutant 5 mL de solution contenant des concentrations variables de morpholine, dans la gamme de 5 × 10$^{-5}$ à 6,24 × 10$^{-4}$ mol·L$^{-1}$, dans 5 mL de la solution de réactifs préparée à l'étape 1). La courbe de calibration du composé d'addition DMACA-morpholine est réalisée en mesurant l'absorbance à 487 nm, à 1H avec une cellule en quartz de 1 cm de trajet optique.

$$\text{Abs (DMACA-morpholine) à 487 nm et 1H} = Cx = 488 \, [\text{morpholine}] \, (\text{Figure 9})$$

4) Echantillonnages

Le prélèvement de la solution à analyser, contenant N$_2$H$_4$ et NH$_2$EtOH (ou N$_2$H$_4$ et morpholine) est réalisé comme suit :

-   Dans une fiole jaugée de 10 mL, on introduit 5 mL de la solution de réactifs, puis 5 mL d'échantillon à analyser. Les concentrations réelles des analytes ayant été diluées de moitié dans le mélange, il faudra tenir compte de cette dilution lors des calculs des concentrations.
-   le spectre d'absorption du mélange est collecté entre 400 et 700 nm à 5 min et à 24H lorsque l'interférent est NH$_2$EtOH
-   le spectre d'absorption du mélange est collecté entre 400 et 700 nm à 5 min et à 1H lorsque l'interférent est morpholine

5) Calculs

a) Le calcul de concentration de N$_2$H$_4$ dans le mélange contenant N$_2$H$_4$ et NH$_2$EtOH (ou morpholine) est le suivant :

- L'absorbance (Abs) du composé d'addition 2DMACA-N$_2$H$_4$ au point isobestique, 553 nm.
- La concentration de N$_2$H$_4$ de l'échantillon en mol·L$^{-1}$ est déduite à l'aide de la courbe de calibration préalablement réalisée au point isobestique Abs (553 nm) = Ax = 29110 [N$_2$H$_4$], selon l'équation :

$$[N_2H_4] = \frac{Abs\ (553\ nm)}{29110} 2$$

b) Lorsque l'interférent est NH$_2$EtOH, le calcul de concentration de NH$_2$EtOH dans le mélange contenant N$_2$H$_4$ et NH$_2$EtOH est le suivant :

- A partir de la concentration de N$_2$H$_4$ obtenue en 5)a), l'absorbance de 2DMACA-N$_2$H$_4$ à 474 nm et à 24H est obtenue à partir de la courbe d'étalonnage Abs (2DMACA-N$_2$H$_4$) à 474 nm, 24H = 7080 [N$_2$H$_4$], obtenue en 2) a).

- L'absorbance de DMACA-NH$_2$EtOH dans le mélange à 24H est déduite :

*Abs* (DMACA-NH$_2$EtOH) à 474 nm = *Abs* (mélange) à 474 nm − *Abs* (2DMACA-N$_2$H$_4$) à 474 nm

- La concentration de NH$_2$EtOH en mol·L$^{-1}$ de l'échantillon est déduite de la courbe de d'étalonnage Abs(DMACA-NH$_2$EtOH) = 117 [NH$_2$EtOH] obtenue en 3)a) (Figure 8) :

$$[NH_2EtOH] = 2\frac{Abs\ (DMACA - NH_2EtOH)\ à\ 474\ nm}{117}$$

c) Lorsque l'interférent est morpholine, le calcul de concentration de morpholine dans le mélange contenant N$_2$H$_4$ et morpholine est le suivant :

- A partir de la concentration de N$_2$H$_4$ obtenue en 5)a), l'absorbance de 2DMACA-N$_2$H$_4$ à 487 nm à 1H est obtenue à partir de la courbe d'étalonnage Abs (2DMACA-N$_2$H$_4$) à 487 nm, 1H = 7810 [N$_2$H$_4$], obtenue en 2) a) (Figure 7).

- L'absorbance de DMACA-morpholine dans le mélange à 1H est déduite :

*Abs* (DMACA-morpholine) à 487nm = *Abs* (mélange) à 487nm − *Abs* (2DMACA-N$_2$H$_4$) à 487nm

- La concentration de morpholine en mol·L$^{-1}$ de l'échantillon, à l'aide de la courbe de d'étalonnage Abs(DMACA-morpholine) = 488 [morpholine] obtenue en 3)b) (Figure 9) :

$$[morpholine] = 2\frac{(Abs)\ à\ 487\ nm}{488}$$

**Exemple 2 : Protocole de dosage de N$_2$H$_4$ et de NH$_2$EtOH dans des solutions aqueuses avec la solution de réactifs contenant [DMACA] = 5 × 10$^{-3}$ M, [PSS] = 3,68 g·L$^{-1}$ soit r = [H$^+$]/[DMACA] = 4**

Le protocole est le même que celui décrit précédemment dans l'Exemple 1 pour la solution de réactifs contenant le DMACA et le PSS, dont r = [H$^+$]/[DMACA] = 10.

Les courbes d'étalonnage de N$_2$H$_4$ sont établies avec une solution de réactifs contenant [DMACA] = 5 × 10$^{-3}$ M, [PSS] = 3,68 g·L$^{-1}$, dont r = [H$^+$]/[DMACA] = 4, à différentes longueurs d'onde : 542 nm (point isobestique) et 474 nm (pic d'absorption de NH$_2$EtOH):

- Au point isobestique (à 542 nm), Abs (542 nm) = Ax = 37744 [N$_2$H$_4$]
- À 474 nm et à 24H, Abs (474 nm, 24H) = A1x = 9599 [N$_2$H$_4$]

La courbe de calibration du composé d'addition DMACA-NH$_2$EtOH est établie à 474 nm, à 24H :

$$\text{Abs (DMACA-NH}_2\text{EtOH) à 474 nm et 24H} = Bx = 429 \, [\text{NH}_2\text{EtOH}]$$

**Exemple 3 : Protocole de dosage de N$_2$H$_4$ et de NH$_2$ETOH (ou morpholine) à l'état gazeux avec la solution de réactifs contenant [DMACA] = 5 × 10$^{-3}$ M, [PSS] = 9,2 g·L$^{-1}$ soit r = [H$^+$]/[DMACA] = 10**

Pour la mesure des analytes à l'état gazeux, N$_2$H$_4$ et NH$_2$EtOH et morpholine gazeux doivent être générés et leurs concentrations calibrées.
Le protocole de dosage de N$_2$H$_4$ et de NH$_2$EtOH (ou morpholine) gazeux nécessite une étape supplémentaire comparativement au dosage de ces mêmes analytes en solution aqueuse. Cette étape correspond à la collecte de l'air ambiant à analyser pour le faire barboter dans le réactif liquide. Le protocole est le même que celui décrit dans l'exemple 1 pour la quantification des analytes en solution aqueuse pour les étapes 1), 2) 3).
L'étape 4) d'échantillonnage est le suivant : l'air à analyser est pompé avec un débit de 1L·min$^{-1}$ au travers d'un barboteur de 3,16 cm de diamètre et de 34 cm de hauteur rempli de 50 mL de la solution de réactifs préparée à l'étape 1). Au bout d'une heure, la solution est prélevée pour l'analyse spectrophotométrique.
Le spectre du mélange est collecté entre 400 et 700 nm à 5 min et au bout de 24H lorsque l'interférent est NH$_2$EtOH.
Le spectre du mélange est collecté entre 400 et 700 nm à 5 min et au bout de 1H lorsque l'interférent est morpholine.
L'étape 5) des calculs permet de déterminer les concentrations de N$_2$H$_4$ et de NH$_2$EtOH (ou morpholine) dissous dans le réactif. Pour retrouver les concentrations de ces analytes dans le mélange gazeux, il faut tenir compte du volume total de gaz pompé à un flux de 1L·min$^{-1}$ pendant 1H.

a) Le calcul de concentration de N$_2$H$_4$ dans le mélange contenant N$_2$H$_4$ et NH$_2$EtOH (ou morpholine) est le suivant :

- L'absorbance (Abs) du composé d'addition 2DMACA-N$_2$H$_4$ au point isobestique, 553 nm pour r = [H$^+$]/[DMACA] = 10.

- La concentration de N$_2$H$_4$ de l'échantillon en mol·L$^{-1}$ est déduite à l'aide de la courbe de calibration préalablement réalisée au point isobestique Abs (553 nm) = Ax = 29110 [N$_2$H$_4$], selon l'équation :

$$[\text{N}_2\text{H}_4] = \frac{\text{Abs (553 nm)}}{29110}$$

b) Le calcul de concentration de NH$_2$EtOH dans le mélange contenant N$_2$H$_4$ et NH$_2$EtOH est le suivant :

- A partir de la concentration de N$_2$H$_4$ obtenue en 5)a), l'absorbance de 2DMACA-N$_2$H$_4$ à 474 nm et à 24H est obtenue à partir de la courbe d'étalonnage Abs (2DMACA-N$_2$H$_4$) à 474 nm, 1H = 7080 [N$_2$H$_4$], obtenue en 2)a) (Figure 9).

- l'absorbance de DMACA-NH$_2$EtOH dans le mélange à 24H est déduite de :

$$Abs \text{ (DMACA-NH}_2\text{EtOH) à 474 nm} = Abs \text{ (mélange) à 474 nm} - Abs \text{ ((2DMACA-N}_2\text{H}_4) \text{ à 474 nm}$$

- La concentration de NH$_2$EtOH en mol·L$^{-1}$ de l'échantillon est déduite de la courbe d'étalonnage Abs(DMACA-NH$_2$EtOH) = 117 [NH$_2$EtOH] obtenue en 3)a) :

$$[\text{NH}_2\text{EtOH}] = \frac{Abs \text{ (DMACA} - \text{NH}_2\text{EtOH) à 474 } nm}{117}$$

c) Lorsque l'interférent est morpholine, le calcul de concentration de morpholine dans le mélange contenant N$_2$H$_4$ et

$NH_2EtOH$ est le suivant :

- A partir de la concentration de $N_2H_4$ obtenue en 5)a), l'absorbance de $2DMACA-N_2H_4$ à 487 nm à 1H est obtenue à partir de la courbe d'étalonnage Abs ($2DMACA-N_2H_4$) à 487 nm, 1H = 7810 $[N_2H_4]$, obtenue en 2)a) (Figure 9).

- L'absorbance de DMACA-morpholine dans le mélange à 1H est déduite :

$$Abs \text{ (DMACA-morpholine) à 487nm} = Abs \text{ (mélange) à 487nm} - Abs \text{ ((2DMACA-}N_2H_4\text{) à 487nm}$$

- La concentration de morpholine en mol·$L^{-1}$ de l'échantillon, à l'aide de la courbe de d'étalonnage Abs(DMACA-morpholine) = 488 [morpholine] obtenue en 3)b) (Figure 11):

$$[\text{morpholine}] = \frac{(Abs) \text{ à } 487 \ nm}{488}$$

d) La teneur de $N_2H_4$ (ou de $NH_2EtOH$ ou de morpholine) dans le mélange gazeux en ppb est déduite selon l'équation :

$$[i] \ (ppb) = \frac{nombre \ de \ mole \ de \ i}{nombre \ de \ mole \ d'air} * 10^9$$

Avec :

- i = $N_2H_4$, $NH_2EtOH$, ou morpholine
- nombre de mole de i = [i] (mol ·$L^{-1}$) * V (V = volume de la solution de réactif = 50 × $10^{-3}$ L)

$$[\text{nombre de mole d'air}] = \frac{D*t}{V_m}$$ (D = débit d'air = 1 L·$min^{-1}$, t = durée de l'échantillonnage = 1H, $V_m$ = volume molaire = 24,21 L·$mol^{-1}$ à 22°C)

**Exemple 4 : Application du procédé selon l'invention à la détermination de $N_2H_4$ et $NH_2EtOH$ dans des solutions aqueuses contenant différentes concentrations d'analytes et en présence d'une base forte, $NH_3$ avec 50 $[N_2H_4]$ < $[NH_3]$ < 100 $[N_2H_4]$. Solution de réactifs : [DMACA] = 5 × $10^{-3}$ M, [PSS] = 9,2 g·$L^{-1}$ soit r = $[H^+]$/[DMACA] = 10 et le point isobestique à 553 nm.**

Sept exemples d'application de la méthode sont ici donnés. Des mélanges de concentrations connues de $N_2H_4$, $NH_2EtOH$ et de $NH_3$ avec des rapports différents de $[NH_3]/[N_2H_4]$ et $[NH_2EtOH]/[N_2H_4]$ ont été préparés et les spectres des mélanges ont été collectés à 24H. Ces spectres ont été analysés en collectant les valeurs d'absorbance aux longueurs d'onde spécifiques, 553 et 474 nm, pour déduire les concentrations de $N_2H_4$ et $NH_2EtOH$. Les valeurs calculées sont alors comparées aux valeurs théoriques des concentrations (**Tableau 1**).

[Tableau 1]

| | | $\frac{[NH_3]}{[N_2H_4]}$ | $\frac{[NH_2EtOH]}{[N_2H_4]}$ | $[NH_3] \times 10^{-4}$ M | $[N_2H_4] \times 10^{-6}$ M | | | | $[NH_2EtOH] \times 10^{-4}$ M | | |
|---|---|---|---|---|---|---|---|---|---|---|---|
| | | | | Théorique | Calcul ($\Delta=\pm7\%$) | Théorique | Ecart (%) | | Calcul ($\Delta=\pm7\%$) | Théorique | Ecart (%) |
| Ex 1 | | 100 | 100 | 5,63 | 5,83 | 5,63 | +3,5 | | 6,42 | 5,63 | +14,1 |
| Ex 2 | | 100 | 100 | 4,50 | 4,49 | 4,5 | +0,3 | | 5,16 | 4,50 | +14,7 |
| Ex 3 | | 100 | 100 | 3,38 | 3,27 | 3,38 | +3,1 | | 2,65 | 3,38 | -21,5 |
| Ex 4 | | 100 | 100 | 2,25 | 2,16 | 2,25 | +4,2 | | 1,64 | 2,25 | -27,1 |

(suite)

| | $\frac{[NH_3]}{[N_2H_4]}$ | $\frac{[NH_2EtOH]}{[N_2H_4]}$ | $[NH_3]\times 10^{-4}$ M | $[N_2H_4]\times 10^{-6}$ M | | | | $[NH_2EtOH] \times 10^{-4}$ M | | |
|---|---|---|---|---|---|---|---|---|---|---|
| | | | Théorique | Calcul ($\Delta=\pm7\%$) | Théorique | Ecart (%) | | Calcul ($\Delta=\pm7\%$) | Théorique | Ecart (%) |
| Ex 5 | 100 | 50 | 4,5 | 4,31 | 4,19 | +2,7 | | 2,90 | 2,25 | +28,8 |
| Ex 6 | 50 | 60 | 1,75 | 3,37 | 3,26 | +3,4 | | 2,68 | 2,10 | +27,5 |
| Ex 7 | 10 | 80 | 0,15 | 1,48 | 1,4 | +5,8 | | 0,97 | 1,20 | -19,2 |

Tableau 1 : Résultats des tests de dosage de $N_2H_4$ et $NH_2EtOH$ dans le mélange contenant $NH_3$, $N_2H_4$ et $NH_2EtOH$. [DMACA] = $5 \times 10^{-3}$ M, [PSS] = 9,2 g·L$^{-1}$ soit r = [H$^+$]/[DMACA] = 10, parcours optique 1 cm. Ecart = (valeur calculée - valeur théorique)/valeur théorique.

Cet exemple démontre la très bonne fiabilité du procédé selon l'invention, en particulier en ce qui concerne la détection et la quantification de l'hydrazine, puisque des écarts très faibles (inférieurs à 6%) sont observés entre les valeurs calculée et théorique.

Cet exemple démontre également la très bonne sensibilité du procédé en ce qui concerne la détection et la quantification de l'hydrazine puisque les concentrations calculées grâce au procédé sont très proches des concentrations théoriques malgré des concentrations d'interférents ($NH_3$ ou $NH_2EtOH$) jusqu'à 100 fois plus grandes que celle de l'hydrazine.

**Exemple 5 : Application du procédé selon l'invention à la détermination de $N_2H_4$ et morpholine dans des solutions aqueuses contenant différentes concentrations d'analytes et en présence d'une base forte, $NH_3$ avec $[NH_3] = 150 [N_2H_4]$. Solution de réactifs : [DMACA] = $5 \times 10^{-3}$ M, [PSS] = 9,2 g·L$^{-1}$ soit r = [H$^+$]/[DMACA] = 10 et le point isobestique à 553 nm.**

Quatre exemples d'application de la méthode d'analyse sont ici donnés. Des mélanges de concentrations connues de $N_2H_4$, morpholine et de $NH_3$ avec des rapports de $[NH_3]/[N_2H_4]$ = 100 et $[morpholine]/[N_2H_4]$ = 100 ont été préparés et les spectres des mélanges ont été collectés à 1H. Ces spectres ont été analysés en collectant les valeurs d'absorbance aux longueurs d'onde spécifiques, 553 et 487 nm, pour déduire les concentrations de $N_2H_4$ et morpholine. Les valeurs calculées sont alors comparées aux valeurs théoriques des concentrations (Tableau 2).

Tableau 2 : Résultats des tests de dosage de $N_2H_4$ et de morpholine dans le mélange contenant $NH_3$, $N_2H_4$ et morpholine. $[NH_3]$ = [morpholine] = $100 \times [N_2H_4]$, [DMACA] = $5 \times 10^{-3}$ M, [PSS] = 9,2 g·L$^{-1}$, parcours optique 1 cm. Ecart= (valeur calculée - valeur théorique)/valeur théorique.

| | $[NH_3]$ ($\times 10^{-4}$ M) | $[N_2H_4]$ ($\times 10^{-6}$ M) | | | [morpholine] ($\times 10^{-4}$ M) | | |
|---|---|---|---|---|---|---|---|
| | Théorique | 4,83 | 4,66 | -3,8 | 4,36 | 4,66 | +6,5 |
| Ex 1 | 4,66 | 3,24 | 3,26 | +0,3 | 2,92 | 3,26 | +10,4 |
| Ex 2 | 3,26 | 1,98 | 1,86 | -6,6 | 1,85 | 1,86 | +0,3 |
| Ex 3 | 1,86 | 0,95 | 0,932 | -2,1 | 0,934 | 0,932 | -0,2 |
| Ex 4 | 0,466 | 4,83 | 4,66 | -3,8 | 4,36 | 4,66 | +6,5 |

Comme pour l'exemple 1, cet exemple démontre la très bonne fiabilité du procédé selon l'invention, en particulier en ce qui concerne la détection et la quantification de l'hydrazine, puisque des écarts très faibles (inférieurs à 7%) sont observés entre les valeurs calculée et théorique.

Cet exemple démontre également la très bonne sensibilité du procédé en ce qui concerne la détection et la quantification de l'hydrazine puisque les concentrations calculées grâce au procédé sont très proches des concentrations théoriques malgré des concentrations d'interférents ($NH_3$ et morpholine) 100 fois plus grandes que celle de l'hydrazine.

**Exemple 6 : Application du procédé selon l'invention à la détermination de N₂H₄ et NH₂EtOH dans des solutions aqueuses contenant différentes concentrations d'analytes et en présence d'une base forte, NH₃ avec [NH₃] = [NH₂EtOH] = 96,55 [N₂H₄]. Solution de réactifs : [DMACA] = 5 × 10⁻³ M, [PSS] = 3,68 g·L⁻¹ soit r = [H⁺]/[DMACA] = 4 et le point isobestique à 542 nm.**

Quatre exemples d'application de la méthode d'analyse sont ici donnés. Des mélanges de concentrations connues de $N_2H_4$, $NH_2EtOH$ et de $NH_3$ avec des rapports de $[NH_3]/[N_2H_4] = 96,55$ et $[NH_2EtOH]/[N_2H_4] = 96,55$ ont été préparés et les spectres des mélanges ont été collectés à 24H. Ces spectres ont été analysés en collectant les valeurs d'absorbance aux longueurs d'onde spécifiques, 542 nm et 474 nm, pour déduire les concentrations de $N_2H_4$ et $NH_2EtOH$. Les valeurs calculées sont alors comparées aux valeurs théoriques des concentrations (Tableau 3).

**Tableau 3 : Résultats des tests en aveugle de dosage de NH₂EtOH et N₂H₄ avec r = 4 dans le mélange contenant NH₃, N₂H₄ et NH₂EtOH. [NH₃] = [NH₂EtOH] = 96,55 × [N₂H₄], [DMACA] = 5 × 10⁻³ M, [PSS] = 3,68 g·L⁻¹ soit r = [H⁺]/[DMACA] = 4, cellule en quartz de chemin optique 1 cm. Ecart= ((valeur calculée - valeur théorique)/valeur théorique).**

| | $[NH_3]$ ($\times 10^{-4}$ M) | $[N_2H_4]$ ($\times 10^{-6}$ M) | | | $[NH_2EtOH]$ ($\times 10^{-4}$ M) | | |
|---|---|---|---|---|---|---|---|
| | Théorique | Calcul ($\Delta = \pm 7\%$) | Théorique | Ecart (%) | Calcul (24H) ($\Delta = \pm 7\%$) | Théorique | Ecart (%) |
| Ex 1 | 5,84 | 5,81 | 6,05 | -3,9 | 4,84 | 5,84 | -17,4 |
| Ex 2 | 4,78 | 4,95 | 4,95 | +0,1 | 3,99 | 4,78 | -16,6 |
| Ex 3 | 3,72 | 3,92 | 3,85 | +1,9 | 3,.07 | 3,72 | -17,3 |
| Ex 4 | 2,66 | 2,79 | 2,75 | +1,5 | 2,00 | 2,66 | -24,7 |

Comme pour les exemples 1 et 2, cet exemple démontre la très bonne fiabilité du procédé selon l'invention, en particulier en ce qui concerne la détection et la quantification de l'hydrazine, puisque des écarts très faibles (inférieurs à 4%) sont observés entre les valeurs calculée et théorique.

Cet exemple démontre également la très bonne sensibilité du procédé en ce qui concerne la détection et la quantification de l'hydrazine puisque les concentrations calculées grâce au procédé sont très proches des concentrations théoriques malgré des concentrations d'interférents ($NH_3$ et $NH_2EtOH$) près de 100 fois plus grandes que celle de l'hydrazine.

**Exemple 7 : Mesures en solution aqueuse de N₂H₄ en présence d'interférents sur sites industriels**

Des mesures d'hydrazine liquide ont été réalisées sur quatre échantillons prélevés sur site industriel. En plus de l'hydrazine, les prélèvements contenaient d'autres amines du type $NH_2EtOH + NH_3$ ou morpholine + $NH_3$ à des concentrations variables. Les résultats des mesures réalisées ont été systématiquement confrontés aux mesures ampérométriques en lignes automatisées effectuées sur les lignes échantillonnées et aux mesures réalisées avec le réactif pDMAB (p-diméthylaminobenzaldéhyde). La Figure 10 illustre l'ensemble des résultats obtenus.

Cet exemple démontre que le procédé selon l'invention permet d'obtenir des résultats de concentration d'hydrazine très proches de ceux obtenus par la méthode connue utilisant le pDMAB. En effet, entre les deux méthodes des écarts de concentration inférieurs à 2 µg/L sont observés.

**Exemple 5 : Application du procédé selon l'invention à la détermination de N₂H₄ et NH₂EtOH gazeux dans l'air ambiant contenant différentes concentrations d'analytes et en présence d'une base forte, NH₃ avec 85 [N₂H₄] < [NH₃] < 116 [N₂H₄]. Solution de réactifs : [DMACA] = 5 × 10⁻³ M, [PSS] = 9,2 g·L⁻¹ soit r = [H⁺]/[DMACA] = 10.**

Cinq exemples d'application de la méthode sont ici donnés. Des mélanges de concentrations connues de $N_2H_4$, $NH_2EtOH$ et de $NH_3$ avec des rapports différents de $[NH_3]/[N_2H_4]$ et $[NH_2EtOH]/[N_2H_4]$ ont été préparés. L'air à analyser est pompé à un flux de 1L·min⁻¹ pour le faire barboter dans 50 mL de réactif pendant 1H. Les spectres des mélanges ont été collectés à 24H. Ces spectres ont été analysés en collectant les valeurs d'absorbance aux longueurs d'onde spécifiques, 553 et 474 nm, pour déduire les concentrations de $N_2H_4$ et $NH_2EtOH$. Les valeurs calculées sont alors comparées aux valeurs théoriques des concentrations (Tableau 4).

**Tableau 4 : Résultats de dosage de $N_2H_4$ et $NH_2EtOH$ gazeux dans le mélange contenant $NH_3$, $N_2H_4$ et $NH_2EtOH$, avec 50 mL de réactif contenant [DMACA] = 5 $\times$ $10^{-3}$ M, [PSS] = 9,2 g·$L^{-1}$ soit r = [$H^+$]/[DMACA] = 10, cellule en quartz de chemin optique 1 cm. T° = 22°C. Ecart = (valeur calculée - valeur théorique)/valeur théorique.**

| | $\frac{[NH_3]}{[N_2H_4]}$ | $\frac{[NH_2EtOH]}{[N_2H_4]}$ | [NH_3] ppm | [N_2H_4] ppb | | | [NH_2EtOH] ppm | | |
|---|---|---|---|---|---|---|---|---|---|
| | | | Théorique | Calcul ($\Delta=\pm7\%$) | Théorique ($\Delta=\pm8\%$) | Ecart (%) | Calcul (24H) ($\Delta=\pm7\%$) | Théorique | Ecart (%) |
| Ex 1 | 104 | 99 | 1 | 10,6 | 9,6 | 10,8% | _ | 0,95 | _ |
| Ex 2 | 116 | 111 | 5 | 37,2 | 43 | -13,5% | 4.79 | 4,76 | 0,6% |
| Ex 3 | 93 | 88 | 5 | 61,5 | 54 | 13,9% | 4.35 | 4,76 | -8,6% |
| Ex 4 | 87 | 45 | 18.3 | 229,8 | 211 | 8,9% | 9.1 | 9,52 | -4,4% |
| Ex 5 | 85 | 81 | 10 | 137,7 | 117 | 17,7% | 9.6 | 9,52 | 0,8% |

Cet exemple démontre la très bonne fiabilité du procédé selon l'invention appliqué à un échantillon gazeux, en particulier en ce qui concerne la détection et la quantification de l'hydrazine, puisque des écarts faibles (inférieurs à 18%) sont observés entre les valeurs calculée et théorique.

Cet exemple démontre également la très bonne sensibilité du procédé selon l'invention appliqué à un échantillon gazeux en ce qui concerne la détection et la quantification de l'hydrazine puisque les concentrations calculées grâce au procédé sont très proches des concentrations théoriques malgré des proportions d'interférents ($NH_3$ ou $NH_2EtOH$) jusqu'à 100 fois plus grandes que celle de l'hydrazine.

**Exemple 6 : Application du procédé selon l'invention à la détermination de $N_2H_4$ dans l'air ambiant contenant différentes concentrations d'analytes morpholine gazeux et en présence d'une base forte, $NH_3$ avec 57 [$N_2H_4$] < [$NH_3$] < 164 [$N_2H_4$]. Solution de réactifs : [DMACA] = 5 $\times$ $10^{-3}$ M, [PSS] = 9,2 g·$L^{-1}$ soit r = [$H^+$]/[DMACA] = 10.**

Sept exemples d'application de la méthode sont ici donnés. Des mélanges de concentrations connues de $N_2H_4$, morpholine et de $NH_3$ avec des rapports différents de [$NH_3$]/[$N_2H_4$] et [morpholine]/[$N_2H_4$] ont été préparés sur banc gazeux expérimental. L'air à analyser est pompé à un flux de 1L.$min^{-1}$ pour le faire barboter dans 50 mL de réactif pendant 1H. Les spectres des mélanges ont été collectés à 1H. Ces spectres ont été analysés en collectant les valeurs d'absorbance aux longueurs d'onde spécifiques, 553 et 487 nm, pour déduire les concentrations de $N_2H_4$ et morpholine. Les valeurs calculées sont alors comparées aux valeurs théoriques des concentrations (Tableau 5).

**Tableau 5 : Résultats de dosage de $N_2H_4$ dans le mélange contenant $NH_3$, $N_2H_4$ et morpholine, avec 50 mL de réactif contenant [DMACA] = 5 $\times$ $10^{-3}$ M, [PSS] = 9,2 g·$L^{-1}$ soit r = [$H^+$]/[DMACA] = 10, cellule en quartz de chemin optique 1 cm. T° = 22°C. Ecart = (valeur calculée - valeur théorique)/valeur théorique.**

| | $\frac{[NH_3]}{[N_2H_4]}$ | [morpholine] [N_2H_4] | [NH_3] ppm | [N_2H_4] ppb | | | [morpholine] ppm | | |
|---|---|---|---|---|---|---|---|---|---|
| | | | Théorique | Calcul ($\Delta=\pm7\%$) | Théorique ($\Delta=\pm8\%$) | Ecart (%) | Calcul (1H) ($\Delta=\pm7\%$) | Théorique | Ecart (%) |
| Ex 1 | 138 | 146 | 9 | 71 | 65 | 9,2% | 8,8 | 9,5 | -7,4% |
| Ex 2 | 138 | 66 | 9 | 71 | 65 | 9,2% | 4,4 | 4,3 | 2,3% |
| Ex 3 | 109 | 113 | 10,8 | 103,5 | 99,2 | 4,3% | 11,5 | 11,2 | 2,7% |

(suite)

| | $\frac{[NH_3]}{[N_2H_4]}$ | [morpholine] $[N_2H_4]$ | [NH₃] ppm | | [N₂H₄] ppb | | | [morpholine] ppm | | |
|---|---|---|---|---|---|---|---|---|---|---|
| | | | Théorique | Calcul ($\Delta=\pm7$ %) | Théorique ($\Delta=\pm8$ %) | Ecart (%) | Calcul (1H) ($\Delta=\pm7$%) | Théorique | Ecart (%) |
| Ex 4 | 76 | 79 | 7,5 | 102,1 | 99,2 | 2,9% | 7,9 | 7,8 | 1,3% |
| Ex 5 | 164 | 170 | 8,3 | 54,2 | 50,5 | 7,3% | 8,3 | 8,6 | -3,5% |
| Ex 6 | 99 | 103 | 5 | 52,8 | 50,5 | 4,6% | 4,6 | 5,2 | -11,5% |
| Ex 7 | 57 | 46 | 1,6 | 32,8 | 28,3 | 15,9% | 1,1 | 1,3 | -15,4% |

Comme l'exemple 5, cet exemple démontre la très bonne fiabilité du procédé selon l'invention appliqué à un échantillon gazeux, en particulier en ce qui concerne la détection et la quantification de l'hydrazine, puisque des écarts faibles (inférieurs à 16%) sont observés entre les valeurs calculée et théorique.

Cet exemple démontre également la très bonne sensibilité du procédé selon l'invention appliqué à un échantillon gazeux en ce qui concerne la détection et la quantification de l'hydrazine puisque les concentrations calculées grâce au procédé sont très proches des concentrations théoriques malgré des proportions d'interférents (NH₃ ou morpholine) jusqu'à 170 fois plus grandes que celle de l'hydrazine.

**Exemple 9 : Exemples de mesures de N₂H₄ à l'état gazeux à deux niveaux de concentration**

Des prélèvements d'air ont été réalisés dans le ciel gazeux de deux réservoirs fermés contenant une solution d'hydrazine concentrée. Les concentrations d'hydrazine en phase liquide ne sont pas connues précisément, mais sont estimées à 1% en poids.

Le but de la présente expérience est d'étudier la reproductibilité du procédé selon l'invention pour la quantification d'hydrazine dans un échantillon gazeux, la concentration d'hydrazine dans cet échantillon n'étant pas connue.

Le temps de prélèvement et de barbotage dans la solution de réactif (DMACA/PSS avec r=10) est de 1 heure.

| | [N₂H₄]$_{air}$ ($\mu g/m^3$) | ± | Écart type | [N₂H₄]$_{air}$ (ppb) | ± | Écart type |
|---|---|---|---|---|---|---|
| Réservoir N°1 | 89 | ± | 13 | 67 | ± | 10 |
| Réservoir N°2 | 70 | ± | 8 | 53 | ± | 6 |

Cette expérience démontre la bonne reproductibilité du procédé de quantification d'hydrazine dans un échantillon gazeux puisque les écart-types reportés dans le tableau ci-dessus sont faibles.

Dans l'objectif d'évaluer la reproductibilité de la méthode sur des échantillons plus faiblement concentrés, 20 prélèvements ont été effectués à une distance de 7 mètres du réservoir N°1 mentionné ci-dessus, recouvert d'un couvercle non étanche.. Ces échantillonnages ont été effectués dans des conditions expérimentales identiques. Des concentrations de 1,80 ppb d'hydrazine ont été mesurées. La Figure 11 illustre la distribution des résultats obtenus sur l'ensemble des échantillonnages réalisés.

**Cette expérience démontre la très bonne répétabilité du procédé selon l'invention appliqué à un échantillon gazeux et à faible concentration en hydrazine puisque, à l'exception d'une mesure, tous les résultats présentent des variations de mesure inférieures à 0,5 ppb, ce qui est vraiment minime.**

**Liste des documents cités**

[1] G. W. WATT, J. D. CHRISP, A Spectrophotometric Method for the Détermination of Hydrazine, Anal. Chem., 24 (12), 2006-2008, 1952.

[2] C. GOJON, B. DUREAULT, Spectrophotometric Study of the Reaction between Hydrazine and p. dimethylaminobenzaldehyde, Journal of NUCLEAR SCIENCE and TECHNOLOGY, 33 (9), p. 731-735, 1996.

[3] S. Ganesh, F. Khan, M. K. Ahmed, P. Velavendan, N. K. Pandey, U. K. Mudali, Spectrophotometric Détermination of Hydrazine with Para-(Dimethylamino) Benzaldehyde in Aqueous Streams of Purex Process, IJNESE, 2 (1), 2012.

[4] M. George, K.S. Nagaraja, N. Balasubramanian, Spectrophotometric détermination of hydrazine, Talanta, 75, p. 27-31, 2008.

[5] P. Ortega-Barrales, A. Molina-Diaza, M. I. Pascual-Reguera, L. F. Capith-Vallvey, Solid-phase spectrophotometric détermination of trace amounts of hydrazine at sub-ng ml-1 level, Analytica Chimica Acta, 353, p. 115-122, 1997.

[6] S. Amlathe, V. K. Gupta, Spectrophotometric Détermination of Trace Amounts of Hydrazine in Polluted Water, ANALYST, 113, p. 1481 - 1483, 1988.

[7] R. Kaveeshwar, V. K. Gupta, A new speetrophotometric method for the détermination of hydrazine in environmental samples, Fresenius J Anal Chem, 344, p. 114-117, 1992.

[8] J. Manes, P. Campillos, G. Font, Extraction - Spectrophotometric Détermination of Hydrazine with 2-Hydroxy-1-Naphthaldehyde, ANALYST, 112, p. 1183 - 1184, 1987.

[9] D. S. Kosyakova, A. S. Amosov, N. V. Ul'yanovskii, A. V. Ladesov, Yu. G. Khabarov, O. A. Shpigun, Spectrophotometric Détermination of Hydrazine, Methylhydrazine, and 1,1-Dimethylhydrazine with Preliminary Derivatization by 5-Nitro-2-Furaldehyde, Journal of Analytical Chemistry, 72 (2), pp. 171-177, 2017.

[10] B. Roy, S. Bandyopadhyay, The design strategies and mechanisms of fluorogenic and chromogenic probes for the détection of hydrazine, Anal. Methods, 10, p. 1117-1139, 2018.

[11] K. H. Nguyen, Y. Hao, W. Chen, Y. Zhang, M. Xu, M. Yang, Y.-N. Liu, Recent progress in the development of fluorescent probes for hydrazine, Luminescence, 33, p. 816-836, 2018.

[12] Y. Jung, I. G. Ju, Y. H. Choe, Y. Kim, S. Park, Y.-M. Hyun, M. S. Oh, D. Kim, Hydrazine Exposé: The Next-Generation Fluorescent Probe, ACS Sens., 4, 441-449, 2019.

[13] Shweta, A. Kumar, Neeraj, S. K. Asthana, A. Prakash, J. K. Roy, I. Tiwari, K. K. Upadhyay, A highly sensitive naphthaoxazole-based cell-permeable ratiometric chemodosimeter for hydrazine, RSC Adv., 6, p. 94959-94966, 2016.

[14] L. Cui, Z. Peng, C. Ji, J. Huang, D. Huang, J. Ma, S. Zhang, X. Qian, Y. Xu, Hydrazine détection in the gas state and aqueous solution based on the Gabriel mechanism and its imaging in living cells, Chem. Commun., 50, p. 1485-1487, 2014.

[15] X. Xia, F. Zeng, P. Zhang, J. Lyu, Y. Huang and S. Wu, An ICT-based ratiometric fluorescent probe for hydrazine détection and its application in living cells and in vivo, Sens. Actuators B Chem., 227, p. 411-418, 2016.

[16] A. Aflchami, A. Afshar-E-Asl, Kinetic-spectophotometric détermination of hydrazine by the inhibition of the bromate-hydrochloric acid reaction, Analytica Chimica Acta, 419, p. 101-106, 2000.

[17] V. D. Mitic, S. D. Nikolic, V. P. Stankov-Jovanovic, Kinetic spectrophotometric détermination of hydrazine, Cent. Eur. J. Chem., 8(3), p. 559-565, 2010.

[18] W. Gao, J. Xi, Y; Chen, S. Xiao, Y. Lin, Y. Chen, A facile and one-step colorimetric détermination of hydrazine during formation of size-controlled amidosulfonic acid capped gold nanoparticles, Anal. Methods, 4, p. 3836-3840, 2012.

[19] B. Zargar, A. Hatamie, A simple and fast colorimetric method for détection of hydrazine in water samples based on formation of gold nanoparticles as a colorimetric probe, Sensors and Actuators B 182, p. 706- 710, 2013.

[20] Z. Zhao, G. Zhang, Y. Gao, X. Yang, Y. Li, A novel détection technique of hydrazine hydrate: modality change of hydrogen bonding-induced rapid and ultrasensitive colorimetric assay, Chem. Commun., 47, p. 12816-12818, 2011.

[21] S. Dorostkar, B. Hemmateenejad, Label-free colorimetric détection of picomolar amounts of hydrazine using a gold nanoparticle-based assay, J IRAN CHEM SOC, 10, p. 513-519, 2013.

[22] J. Tashkhourian, M. R. Hormozi-Nezhad, M. Fotovat, Optical Détection of Some Hydrazine Compounds Based on the Surface Plasmon Resonance Band of Silver Nanoparticles, Spectroscopy Letters, 46, p. 73-80, 2013.

[23] Fiche toxicologique n° 21 INRS http://www.inrs.fr/publications/bdd/fichetox/fiche.html?refINRS=FICHETOX_21

[24] Qualité de l'air. Air des lieux de travail. Prélèvement et analyse des vapeurs organiques. Prélèvement par pompage sur tube à adsorption et désorption au solvant. Norme NF X 43-267. La Plaine Saint Denis: AFNOR ;2004.

[25] Fiche Métropole Hydrazine M-7, http://www.inrs.fr/publications/bdd/metropol/fiche.html?refINRS=METRO POL_7

[26] Hydrazine. Method 108 In: Sampling and Analytical methods. OSHA, 1997 (https://www.osha.gov/dts/sltc/ methods/organic/org108/org108.html) ou (https://www.osha.gov/sites/default/files/methods/osha-108.pdf)

[27] B. J. Meneghelli, A review of hydrazine sensors: The state of the art, ASRC Aerospace Corp., Cocoa Beach, FL, United States, 2004.

[28] K. P. Brenner, S. L. Rose-Pehrss on, Performance Evaluation of a Colorimetric Hydrazine Dosimeter, 1994.

[29] https://dodtec.com/hydrazine-mmh-dose-estimator.html

[30] https://www.chemsee.com/commercial/toxic-gas/available-products/dosimeters/hyd-009-dosimeter-for-hydra zine/

[31] Rose-Pehrsson et al., brevet US005719061A

[32] http://catalog.gasdetection.com/item/search-by-gas-type-hydrazine-s-/nalyzer-4000-series-with-digital-dis play-hydrazine/4180-1 00b

[33] https://www.raefrance.fr/produit/detecteur-cov-capteur-pid-ppbrae-3000/

[34] https://www.cbrnetechindex.com/p/3525/Smiths-Detection-Inc/Sabre-4000

[35] https://www.environics.fi/product/chempro100i/

[36] https://www.masatech.eu/portable-advanced-ion-mobility-spectrometer

[37] https://www.smithsdetection.com/products/lcd-3-3/

.

## Revendications

1. Procédé de détection dans un échantillon à analyser d'au moins un composé de type amine, ledit composé étant choisi parmi l'hydrazine, l'éthanolamine et la morpholine, à l'aide d'une composition de réactifs comprenant un mélange de 4-(diméthylamino)-cinnamaldéhyde et d'acide polystyrène sulfonique, ledit procédé comprenant les étapes de:

   a) mélange dudit échantillon à analyser avec ladite composition de réactifs pour obtenir un mélange constitué de l'échantillon à analyser et de ladite composition de réactifs,
   b) détection du ou des dit(s) composé(s) de type amine dans le mélange constitué de l'échantillon à analyser et de ladite composition de réactifs.

2. Procédé selon la revendication 1, pour lequel l'étape b) comprend en outre la quantification du ou des dit(s) composé(s) de type amine dans le mélange constitué de l'échantillon à analyser et de ladite composition de réactifs.

3. Procédé selon la revendication 1 ou 2, pour lequel l'échantillon à analyser est un échantillon liquide ou gazeux ou un aérosol.

4. Procédé selon l'une des revendications 1 à 3, pour lequel l'étape b) de détection ou de détection et de quantification est réalisée par mesure de l'absorbance en fonction du temps du mélange constitué de l'échantillon à analyser et de ladite composition de réactifs.

5. Procédé selon l'une des revendications 1 à 4, pour lequel le ratio r des concentrations de 4-(diméthylamino)-cinnamaldéhyde et d'acide polystyrène sulfonique est de 1 à 20, de préférence de 2 à 15, encore plus préférentiellement 10.

6. Composition de réactifs comprenant un mélange de 4-(diméthylamino)-cinnamaldéhyde et d'acide polystyrène sulfonique.

7. Composition selon la revendication 6, pour laquelle le ratio r des concentrations de 4-(diméthylamino)-cinnamaldéhyde et d'acide polystyrène sulfonique est de 1 à 20, de préférence de 2 à 15, encore plus préférentiellement 10.

8. Utilisation d'une composition de réactifs selon la revendication 6 ou 7 pour la détection d'au moins un composé de type amine, ledit composé étant choisi parmi l'hydrazine, l'éthanolamine et la morpholine.

9. Utilisation d'une composition de réactifs selon la revendication 6 ou 7 pour la quantification d'au moins un composé de type amine, ledit composé étant choisi parmi l'hydrazine, l'éthanolamine et la morpholine.

10. Kit de préparation d'une composition de réactifs selon la revendication 6 ou 7, ledit kit comprenant :

- un premier récipient comprenant du 4-(diméthylamino)-cinnamaldéhyde ;
- un deuxième récipient comprenant une solution aqueuse d'acide polystyrène sulfonique.

[Fig. 1]

[Fig. 2]

[Fig. 3]

[Fig. 4]

[Fig. 5]

[Fig. 6]

[Fig. 7]

[Fig. 8]

$y = 117x$

Abs ((DMACA-NH$_2$EtOH) à 474 nm et 24H) = B [NH$_2$EtOH]

$R^2 = 0{,}9981$

[Fig. 9]

$y = 488x$

Abs ((DMACA-morpholine) à 487 nm et 1H) = C[morpholine]

$R^2 = 0{,}9999$

[Fig. 10]

Mesures d'hydrazine sur échantillons liquides réels

● Mesures par DMACA/PSS - r=10    △ Mesures par automate en ligne ou manuelle au pDMABA (1)

[Fig. 11]

| Statistique | [N₂H₄]air (ppb) |
|---|---|
| Nb. d'observations | 20 |
| Nb. de valeurs < LQ | 3 |
| Minimum | 1,15 |
| Maximum | 3,29 |
| Médiane | 1,84 |
| Moyenne | 1,80 |
| Ecart-type (n) | 0,45 |

Mesures d'hydrazine sur échantillons gazeux faiblements concentrés

\* Répétabilité de la méthode à faible concentration

Europäisches
Patentamt

European
Patent Office

Office européen
des brevets

# RAPPORT DE RECHERCHE EUROPEENNE

Numéro de la demande

EP 24 21 1779

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 4 395 494 A (BODART DETLEF [DE] ET AL) 26 juillet 1983 (1983-07-26) * abrégé; revendication 1; exemples 1-3 * * colonne 2, lignes 32-53 * | 1-10 | INV. G01N31/22 |
| A | EL-BRASHY A ET AL: "Colorimetric Determination of Some Important Hydrazine Derivatives", ANALYTICAL LETTERS, vol. 30, no. 3, février 1997 (1997-02), pages 609-622, XP093176755, US ISSN: 0003-2719, DOI: 10.1080/00032719708001805 * abrégé; tableau I. * * page 611 * * page 613, alinéa 3 * | 1-10 | |
| A | US 2020/230542 A1 (TRAN-THI THU-HOA [FR] ET AL) 23 juillet 2020 (2020-07-23) * abrégé * * alinéa [0027] * | 1-10 | |

DOMAINES TECHNIQUES
RECHERCHES (IPC)

G01N

Le présent rapport a été établi pour toutes les revendications

| Lieu de la recherche | Date d'achèvement de la recherche | Examinateur |
|---|---|---|
| Munich | 26 mars 2025 | Hanisch, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 1779

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-03-2025

| Document brevet cité au rapport de recherche | | Date de publication | Membre(s) de la famille de brevet(s) | | Date de publication |
|---|---|---|---|---|---|
| US 4395494 | A | 26-07-1983 | DE | 2942960 A1 | 07-05-1981 |
| | | | EP | 0027917 A1 | 06-05-1981 |
| | | | US | 4395494 A | 26-07-1983 |
| US 2020230542 | A1 | 23-07-2020 | CN | 111094183 A | 01-05-2020 |
| | | | EP | 3658501 A1 | 03-06-2020 |
| | | | FR | 3069534 A1 | 01-02-2019 |
| | | | KR | 20200033931 A | 30-03-2020 |
| | | | US | 2020230542 A1 | 23-07-2020 |
| | | | US | 2023121377 A1 | 20-04-2023 |
| | | | WO | 2019020965 A1 | 31-01-2019 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 005719061 A, Rose-Pehrsson

**Littérature non-brevet citée dans la description**

• *CHEMICAL ABSTRACTS*, 6203-18-5
• *CHEMICAL ABSTRACTS*, 28210-41-5
• *CHEMICAL ABSTRACTS*, 10217-52-4
• *CHEMICAL ABSTRACTS*, 141-43-5
• *CHEMICAL ABSTRACTS*, 110-91-8
• *CHEMICAL ABSTRACTS*, 1336-21-6
• **G. W. WATT** ; **J. D. CHRISP**. A Spectrophotometric Method for the Détermination of Hydrazine. *Anal. Chem.*, 1952, vol. 24 (12), 2006-2008
• **C. GOJON** ; **B. DUREAULT**. Spectrophotometric Study of the Reaction between Hydrazine and p. dimethylaminobenzaldehyde. *Journal of NUCLEAR SCIENCE and TECHNOLOGY*, 1996, vol. 33 (9), 731-735
• **S. GANESH** ; **F. KHAN** ; **M. K. AHMED** ; **P. VELAVENDAN** ; **N. K. PANDEY** ; **U. K. MUDALI**. Spectrophotometric Détermination of Hydrazine with Para-(Dimethylamino) Benzaldehyde in Aqueous Streams of Purex Process. *IJNESE*, 2012, vol. 2 (1)
• **M. GEORGE** ; **K.S. NAGARAJA** ; **N. BALASUBRA-MANIAN**. Spectrophotometric détermination of hydrazine. *Talanta*, 2008, vol. 75, 27-31
• **P. ORTEGA-BARRALES** ; **A. MOLINA-DIAZA** ; **M. I. PASCUAL-REGUERA** ; **L. F. CAPITH**. Vallvey, Solid-phase spectrophotometric détermination of trace amounts of hydrazine at sub-ng ml-1 level. *Analytica Chimica Acta*, 1997, vol. 353, 115-122
• **S. AMLATHE** ; **V. K. GUPTA**. Spectrophotometric Détermination of Trace Amounts of Hydrazine in Polluted Water. *ANALYST*, 1988, vol. 113, 1481-1483
• **R. KAVEESHWAR** ; **V. K. GUPTA**. A new spee-trophotometric method for the détermination of hydrazine in environmental samples. *Fresenius J Anal Chem*, 1992, vol. 344, 114-117
• **J. MANES** ; **P. CAMPILLOS** ; **G. FONT**. Extraction - Spectrophotometric Détermination of Hydrazine with 2-Hydroxy-1-Naphthaldehyde. *ANALYST*, 1987, vol. 112, 1183-1184

• **D. S. KOSYAKOVA** ; **A. S. AMOSOV** ; **N. V. UL'YANOVSKII** ; **A. V. LADESOV** ; **YU. G. KHABA-ROV** ; **O. A. SHPIGUN**. Spectrophotometric Détermination of Hydrazine, Methylhydrazine, and 1,1-Dimethylhydrazine with Preliminary Derivatization by 5-Nitro-2-Furaldehyde. *Journal of Analytical Chemistry*, 2017, vol. 72 (2), 171-177
• **B. ROY** ; **S. BANDYOPADHYAY**. The design strategies and mechanisms of fluorogenic and chromogenic probes for the détection of hydrazine. *Anal. Methods*, 2018, vol. 10, 1117-1139
• **K. H. NGUYEN** ; **Y. HAO** ; **W. CHEN** ; **Y. ZHANG** ; **M. XU** ; **M. YANG** ; **Y.-N. LIU**. Recent progress in the development of fluorescent probes for hydrazine. *Luminescence*, 2018, vol. 33, 816-836
• **Y. JUNG** ; **I. G. JU** ; **Y. H. CHOE** ; **Y. KIM** ; **S. PARK** ; **Y.-M. HYUN** ; **M. S. OH** ; **D. KIM**. Hydrazine Exposé: The Next-Generation Fluorescent Probe. *ACS Sens.*, 2019, vol. 4, 441-449
• **SHWETA, A.** ; **KUMAR, NEERAJ** ; **S. K. ASTHANA** ; **A. PRAKASH** ; **J. K. ROY** ; **I. TIWARI** ; **K. K. UPADHYAY**. A highly sensitive naphthaoxazole-based cell-permeable ratiometric chemodosimeter for hydrazine. *RSC Adv.*, 2016, vol. 6, 94959-94966
• **L. CUI** ; **Z. PENG** ; **C. JI** ; **J. HUANG** ; **D. HUANG** ; **J. MA** ; **S. ZHANG** ; **X. QIAN** ; **Y. XU**. Hydrazine détection in the gas state and aqueous solution based on the Gabriel mechanism and its imaging in living cells. *Chem. Commun.*, 2014, vol. 50, 1485-1487
• **X. XIA** ; **F. ZENG** ; **P. ZHANG** ; **J. LYU** ; **Y. HUANG** ; **S. WU**. An ICT-based ratiometric fluorescent probe for hydrazine détection and its application in living cells and in vivo, Sens. *Actuators B Chem.*, 2016, vol. 227, 411-418
• **A. AFLCHAMI** ; **A. AFSHAR**. E-Asl, Kinetic-specto-photometric détermination of hydrazine by the inhibition of the bromate-hydrochloric acid reaction. *Analytica Chimica Acta*, 2000, vol. 419, 101-106

- **V. D. MITIC** ; **S. D. NIKOLIC** ; **V. P. STANKOV-JOVANOVIC**. Kinetic spectrophotometric détermination of hydrazine. *Cent. Eur. J. Chem.*, 2010, vol. 8 (3), 559-565
- **W. GAO** ; **J. XI** ; **Y; CHEN** ; **S. XIAO** ; **Y. LIN** ; **Y. CHEN**. A facile and one-step colorimetric détermination of hydrazine during formation of size-controlled amidosulfonic acid capped gold nanoparticles. *Anal. Methods*, 2012, vol. 4, 3836-3840
- **B. ZARGAR** ; **A. HATAMIE**. A simple and fast colorimetric method for détection of hydrazine in water samples based on formation of gold nanoparticles as a colorimetric probe. *Sensors and Actuators B*, 2013, vol. 182, 706-710
- **Z. ZHAO** ; **G. ZHANG** ; **Y. GAO** ; **X. YANG** ; **Y. LI**. A novel détection technique of hydrazine hydrate: modality change of hydrogen bonding-induced rapid and ultrasensitive colorimetric assay. *Chem. Commun.*, 2011, vol. 47, 12816-12818
- **S. DOROSTKAR** ; **B. HEMMATEENEJAD**. Label-free colorimetric détection of picomolar amounts of hydrazine using a gold nanoparticle-based assay. *J IRAN CHEM SOC*, 2013, vol. 10, 513-519

- **J. TASHKHOURIAN** ; **M. R. HORMOZI-NEZHAD** ; **M. FOTOVAT**. Optical Détection of Some Hydrazine Compounds Based on the Surface Plasmon Resonance Band of Silver Nanoparticles. *Spectroscopy Letters*, 2013, vol. 46, 73-80
- Qualité de l'air. Air des lieux de travail. Prélèvement et analyse des vapeurs organiques. Prélèvement par pompage sur tube à adsorption et désorption au solvant. Norme NF X 43-267. *La Plaine Saint Denis: AFNOR*, 2004
- *Fiche Métropole Hydrazine M-7*, http://www.inrs.fr/publications/bdd/metropol/fiche.html?refINRS=-METROPOL_7
- Hydrazine. Method 108. Sampling and Analytical methods. OSHA, 1997
- **B. J. MENEGHELLI**. A review of hydrazine sensors: The state of the art. ASRC Aerospace Corp., 2004
- **K. P. BRENNER** ; **S. L. ROSE**. *Pehrss on, Performance Evaluation of a Colorimetric Hydrazine Dosimeter*, 1994